(19) **Europäisches Patentamt**
**European Patent Office**
**Office européen des brevets**

(11) **EP 4 572 200 A1**

(12) **EUROPEAN PATENT APPLICATION**
published in accordance with Art. 153(4) EPC

(43) Date of publication:
**18.06.2025 Bulletin 2025/25**

(21) Application number: **22954445.7**

(22) Date of filing: **10.08.2022**

(51) International Patent Classification (IPC):
*H04L 5/00* (2006.01)     *H04W 72/04* (2023.01)

(52) Cooperative Patent Classification (CPC):
**H04W 76/20; H04B 7/0695; H04B 7/06968;**
**H04B 7/088; H04L 5/00**

(86) International application number:
**PCT/CN2022/111562**

(87) International publication number:
**WO 2024/031472 (15.02.2024 Gazette 2024/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **GUANGDONG OPPO MOBILE**
**TELECOMMUNICATIONS**
**CORP., LTD.**
**Dongguan, Guangdong 523860 (CN)**

(72) Inventors:
• **HU, Rongyi**
**Dongguan, Guangdong 523860 (CN)**
• **ZHANG, Jinyu**
**Dongguan, Guangdong 523860 (CN)**

(74) Representative: **Penza, Giancarlo**
**Bugnion S.p.A.**
**Viale Lancetti, 17**
**20158 Milano (IT)**

(54) **WIRELESS COMMUNICATION METHOD AND APPARATUS, DEVICE, AND STORAGE MEDIUM**

(57)     Embodiments of the present application provide a wireless communication method and apparatus, a device, and a storage medium. The method comprises: a terminal device receiving at least one indication message sent by a network device, the at least one indication message being used to indicate a first TCI state and a second TCI state; and the terminal device receiving a first transmission on a first downlink channel on the basis of the first TCI state, and receiving a second transmission on a second downlink channel on the basis of the second TCI state.

S601. A terminal device receives at least one indication message from a network device, the at least one indication message indicates a first TCI state and a second TCI state

S602. The terminal device receives a first transmission on a first downlink channel based on the first TCI state and receives a second transmission on a second downlink channel based on the second TCI state

**FIG. 6**

**Description**

TECHNICAL FIELD

The present disclosure relates to the technical field of mobile communications, and particularly to methods and apparatuses for wireless communication, devices and a storage medium.

BACKGROUND

In order to improve reception performance when a terminal device receives a signal, characteristics of a transmission environment corresponding to data transmission may be used to improve a reception algorithm. For example, statistical characteristics of a channel may be used to optimize design and parameters of a channel estimator. In a new radio (NR) system, these characteristics corresponding to the data transmission are represented by quasi co-location (QCL) information (QCL-Info). If downlink transmissions are from different transmission reception points (TRPs)/panels/beams, the characteristics of the transmission environment corresponding to the data transmission may also change. Therefore, in the NR system, the network side, when transmitting a downlink control channel or a data channel, may indicate the corresponding QCL state information to the terminal device by transmitting a unified transmission configuration indication (TCI) state.

SUMMARY

The present disclosure provides methods and apparatuses for wireless communication, devices and a storage medium.

A method for wireless communication provided in the embodiments of the disclosure includes the following operations.

A terminal device receives at least one indication message from a network device. The at least one indication message indicates a first TCI state and a second TCI state.

The terminal device receives a first transmission on a first downlink channel based on the first TCI state and receives a second transmission on a second downlink channel based on the second TCI state.

A method for wireless communication provided in the embodiments of the disclosure includes the following operations.

A network device transmits at least one indication message to a terminal device. The at least one indication message indicates a first TCI state and a second TCI state. The first TCI state is used for reception of a first transmission on a first downlink channel, and the second TCI state is used for reception of a second transmission on a second downlink channel.

An apparatus for wireless communication provided in the embodiments of the disclosure includes a first receiving unit and a second receiving unit.

The first receiving unit is configured to receive at least one indication message from a network device. The at least one indication message indicates a first TCI state and a second TCI state.

The second receiving unit is configured to receive a first transmission on a first downlink channel based on the first TCI state, and receive a second transmission on a second downlink channel based on the second TCI state.

An apparatus for wireless communication provided in the embodiments of the disclosure includes a transmitting unit.

The transmitting unit is configured to transmit at least one indication message to a terminal device. The at least one indication message indicates a first TCI state and a second TCI state, the first TCI state is used for reception of a first transmission on a first downlink channel, and the second TCI state is used for reception of a second transmission on a second downlink channel.

Embodiments of the present disclosure provide a communication device, which may be a terminal device in above-mentioned solution and includes a processor and a memory. The memory is configured to store a computer program, and the processor is configured to call the computer program stored in the memory and run the computer program to perform the above method for wireless communication performed by the terminal device.

An embodiment of the present disclosure provides a communication device, which may be a network device in above-mentioned solution and includes a processor and a memory. The memory is configured to store a computer program, and the processor is configured to call the computer program stored in the memory and run the computer program to perform the above method for wireless communication performed by the network device.

Embodiments of the present disclosure provide a chip configured to implement the above method for wireless communication.

Specifically, the chip includes a processor configured to call a computer program from a memory and run the computer program, to cause the device equipped with the chip to perform the above method for wireless communication.

A computer-readable storage medium provided in the embodiments of the disclosure has stored thereon a computer program. The computer program is run by a computer to perform the above method for wireless communication.

A computer program product provided in the embodiments of the disclosure includes computer program instructions. The computer program instructions cause a computer to perform the above method for wireless communication.

A computer program provided in the embodiments of the disclosure, when run on the computer, causes a computer to perform the above method for wireless communication.

According to the above technical solution, when the network device indicates the first TCI state and the second TCI state, the terminal device receives the first transmission on the first downlink channel in a first direction or a first beam corresponding to the first TCI state, and receives the second transmission on the second downlink channel in a second direction or a second beam corresponding to the second TCI state. Therefore, the terminal device, after switching the TCI states of at least two downlink channels, receives downlink data in multiple directions corresponding to multiple TCI states at the same time, to achieve simultaneous reception in multiple directions.

BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and do not constitute an undue limitation of the disclosure. In the drawings:

FIG. 1 is a schematic diagram of an application scenario in an embodiment of the present disclosure.

FIG. 2 is a schematic diagram of an optional indication mode of TCI state configuration information according to an embodiment of the present disclosure.

FIG. 3 is a first optional schematic flowchart for indicating a TCI state according to an embodiment of the present disclosure.

FIG. 4 is a second optional schematic flowchart for indicating a TCI state according to an embodiment of the present disclosure.

FIG. 5 is a third optional schematic flowchart for indicating a TCI state according to an embodiment of the present disclosure.

FIG. 6 is a first optional schematic flowchart of a method for wireless communication according to an embodiment of the present disclosure.

FIG. 7 is a second optional schematic flowchart of a method for wireless communication according to an embodiment of the present disclosure.

FIG. 8 is a third optional schematic flowchart of a method for wireless communication according to an embodiment of the present disclosure.

FIG. 9 is an optional time schematic diagram of times for receiving different downlink channels according to an embodiment of the present disclosure.

FIG. 10 is an optional time schematic diagram of times for switching different TCI states according to an embodiment of the present disclosure.

FIG. 11 is a first optional schematic diagram of a time for performing a method for wireless communication according to an embodiment of the present disclosure.

FIG. 12 is a second optional schematic diagram of a time for performing a method for wireless communication according to an embodiment of the present disclosure.

FIG. 13 is a third optional schematic diagram of a time for performing a method for wireless communication according to an embodiment of the present disclosure.

FIG. 14 is a first optional schematic diagram of a reception direction according to an embodiment of the present disclosure.

FIG. 15 is a second optional schematic diagram of a reception direction according to an embodiment of the present disclosure.

FIG. 16 is a third optional schematic diagram of a reception direction according to an embodiment of the present disclosure.

FIG. 17 is a first optional structure schematic diagram of an apparatus for wireless communication according to an embodiment of the present disclosure.

FIG. 18 is a second optional structure schematic diagram of an apparatus for wireless communication according to an embodiment of the present disclosure.

FIG. 19 is a schematic structural diagram of a communication device according to an embodiment of the present disclosure.

FIG. 20 is a schematic structural diagram of a chip according to an embodiment of the present disclosure.

FIG. 21 is a schematic block diagram of a communication system provided in an embodiment of the present disclosure.

## DETAILED DESCRIPTION

The technical solution in the embodiments of this disclosure will be described with reference to the accompanying drawings in the embodiments of the disclosure. Apparently, the described embodiments are some embodiments of the disclosure rather than all of the embodiments. All other embodiments obtained by a person of ordinary skill in the art based on the embodiments of the disclosure without paying creative efforts shall fall within the scope of protection of the disclosure.

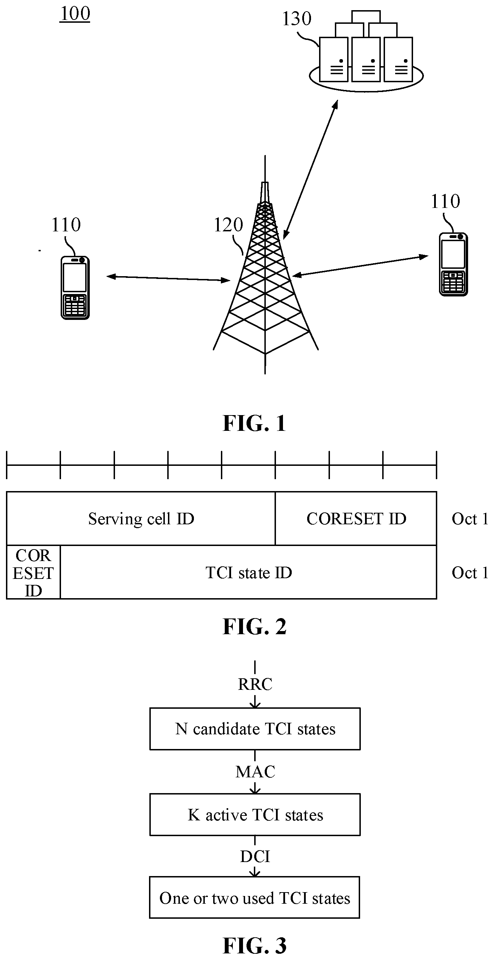

FIG. 1 is a schematic diagram of an application scenario in an embodiment of the present disclosure.

As illustrated in FIG. 1, a communication system 100 may include a terminal device 110 and a network device 120. The network device 120 may communicate with the terminal device 110 via an air interface. Multi-service transmission is supported between the terminal device 110 and the network device 120.

It should be understood that embodiments of the disclosure are illustrative only with the communication system 100 but are not limited thereto. In other words, the technical solution of the embodiments of the disclosure may be applied to various communication systems, such as a long term evolution (LTE) system, an LTE time division duplex (TDD), a universal mobile telecommunications system (UMTS), an Internet of things (IoT) system, a narrow band Internet of things (NB-IoT) system, an enhanced machine-type communications (eMTC) system, a 5-th generation (5G) communication system (also called new radio (NR) communication system), or a future communication system, etc.

In the communication system 100 illustrated in FIG. 1, the network device 120 may be an access network device that communicates with the terminal device 110. The network device 110 may provide communication coverage to a particular geographic area, and may communicate with the terminal device 110 (such as user equipment (UE)) located within the coverage area.

The network device 120 may be an evolutional bode B (eNB or eNodeB) in an LTE system, or a next generation radio access network (NG RAN) device, or a base station in an NR system (gNB), or a wireless controller in a cloud radio access network (CRAN), or the network device may be a relay station, an access point, an on-board device, a wearable device, a hub, a switch, a bridge, a router, a network device in a future evolved public land mobile network (PLMN) or the like.

The terminal device 110 may be any terminal device including but not limited to a terminal device connected with the network device 120 or other terminal devices in wired or wireless connection.

As an example, the terminal device 110 may be an access terminal, UE, a subscriber unit, a subscriber station, a mobile station, a mobile console, a remote station, a remote terminal, a mobile device, a user terminal, a terminal, a wireless communications device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device having a wireless communication function, a computing device, other processing devices connected to a wireless modem, an on-board device, a wearable device, a terminal device in a 5G network, a terminal device in a future evolved network or the like.

The terminal device 110 may be applied to device to device (D2D) communication.

The wireless communication system 100 may also include a core network device 130 that communicates with a base station. The core network device 130 may be a 5G core (5GC) device, for example, an access and mobility management function (AMF), an authentication server function (AUSF), a user plane function (UPF), or a session management function (SMF). Alternatively, the core network device 130 may also be an evolved packet core (EPC) device in the LTE network, for example, may be a session management function + core packet gateway (SMF + PGW-C) device. It should be understood that the SMF + PGW-C may achieve functions that can be achieved by the SMF and PGW-C at the same time. In a process of network evolution, the core network may also be called by other names, or the functions of the core network may be divided to form a new network entity, which is not limited by the embodiments of the disclosure.

Various functional units in the communication system 100 may also be connected with each other through a next generation (NG) interface to realize communication.

For example, the terminal device may establish an air interface connection with the access network device through a Uu interface, to transmit user plane data and control plane signaling. The terminal device may establish control plane signaling connection with the AMF through NG interface 1 (N1 for short). The access network device such as a next generation radio access base station (gNB) may establish a user plane data connection with the UPF through an NG interface 3 (N3 for short). The access network device may establish a control plane signaling connection with the AMF through NG interface 2 (N2 for short). The UPF may establish a control plane signaling connection with the SMF through NG interface 4 (N4 for short). The UPF may interact user plane data with data network through NG interface 6 (N6 for short). The AMF may establish a control plane signaling connection with the SMF through NG interface 11 (N11 for short). The SMF may establish a control plane signaling connection with the PCF through NG Interface 7 (N7 for short).

FIG. 1 illustrates one base station, one core network device and two terminal devices as an example. Optionally, the communication system 100 may include multiple base stations and coverage of each base station may include another quantity of terminal devices, which is not limited in the embodiment of the disclosure.

It should be noted that FIG. 1 only illustrates the system to which the disclosure applies by way of example and of course, the method in the embodiments of the disclosure may also be applicable to other systems. Moreover, terms "system" and "network" in the disclosure are usually interchangeably used. The term "and/or" in the disclosure is only an association relationship for describing the associated objects, and represents that three relationships may exist, for example, A and/or B may represent the following three cases: A exists separately, both A and B exist, and B exists separately. In addition, the character "/" in this specification generally indicates an "or" relationship between the associated objects. It should also be understood that the word "indication" mentioned in embodiments of the disclosure may be a direct indication or an indirect indication, and may also be indicative of a relationship. For example, A indicates B, which may represent that A directly indicates B, for example, B may be obtained through A; or that A indirectly indicates B, for example, A indicates C, and B may be obtained through C; or that there is an association between A and B. It should also be understood that the word "correspondence" in embodiments of the present disclosure may represent that the associated objects have a direct or indirect correspondence relationship, or an association relationship, or a relationship of indicating and being indicated, configured and being configured, etc. It should also be understood that the phrase "being predefined" or "predefined rules" mentioned in embodiments of the disclosure may be implemented by pre-storing corresponding codes, tables in devices (such as terminal devices and network devices), or by other means that may be used for indicating associated information, the specific implementation of which is not limited in the present disclosure. For example, something being predefined may refer to being defined in the protocol. It should also be understood that, in embodiments of the disclosure, the "protocol" may be a standard protocol in the communication field, such as an LTE protocol, an NR protocol, and related protocols applied in future communication systems, which are not limited herein.

For convenience of understanding the technical solution of the embodiments of the disclosure, related technologies in embodiments of the disclosure are described. The following related technologies used as alternative solutions may be combined with technical solution of the embodiments of the disclosure in various ways, and the combinations fall within the scope of the embodiments of the disclosure.

In order to improve reception performance when a terminal device receives a signal, characteristics of a transmission environment corresponding to data transmission may be used to improve a reception algorithm. For example, characteristics of a channel may be used to optimize design and parameters of a channel estimator. In an NR system, these characteristics corresponding to the data transmission are represented by quasi co-location (QCL) information (QCL-Info).

If downlink transmissions are from different transmission reception points (TRPs)/panels/beams, the characteristics of the transmission environment corresponding to the data transmission may also change. Therefore, in the NR system, the network side, when transmitting a downlink control channel or a data channel, may indicate the corresponding QCL state information to the terminal device through a transmission configuration indication (TCI) state.

A TCI state may include following configurations:

- TCI state identifier (Identity document, ID) for identifying a TCI state;
- QCL information 1;
- QCL information 2 (optional).

A piece of QCL information may include:

- a QCL type configuration, which may be one of QCL type A (typeA), QCL type B (typeB), QCL type C (typeC), or QCL type D (typeD);
- a QCL reference signal configuration, including an ID of a serving cell where the reference signal is located, an ID of a bandwidth part (BWP), and an identification of a reference signal. The identification of the reference signal may be a channel status indicator reference signal (CSI-RS) resource ID or a synchronization signal block (SSB) index. The SSB may refer to a synchronization signal (SS)/physical broadcast channel (PBCH) block.

If both QCL information 1 and QCL information 2 are configured, the QCL type of at least one piece of QCL information should be one of QCL typeA, QCL typeB, and QCL typeC, and the QCL type of the other piece of QCL information (if configured) must be QCL typeD.

Different QCL type configurations are defined as follows:

- QCL-TypeA: {Doppler shift, Doppler spread, average delay, delay spread};
- QCL-TypeB: {Doppler shift, Doppler spread};

- QCL-TypeC: {Doppler shift, average delay};
- QCL-TypeD: {Spatial reception (Rx) parameter}.

The related configuration of the TCI-State in a radio resource control (RRC) signaling is illustrated as follows:

```
TCI-State ::=            SEQUENCE {
    tci-StateId             TCI-StateId,
    qcl-Type1               QCL-Info,
    qcl-Type2               QCL-Info    OPTIONAL,
    ...
}
QCL-Info ::=            SEQUENCE {
    cell                    ServCellIndex    OPTIONAL,
    bwp-Id                  BWP-Id  OPTIONAL,
    referenceSignal             CHOICE {
        csi-rs                  NZP-CSI-RS-ResourceId,
        ssb                     SSB-Index
    },
    qcl-Type                ENUMERATED {typeA, typeB, typeC, typeD},
    ...,.
```

As illustrated in FIG. 2, TCI configuration information indicating the related configuration of the TCI-State in a media access control (MAC) control element (CE) includes two octets: octet 1 and octet 2. The two octets include the following information: a TCI state ID and a control resource set (CORESET) ID, and the TCI state indicated by the TCI state ID is applied to the CORESET indicated by the CORESET ID.

Release 16 (Rel. 16)

In the NR system, the network side may indicate a corresponding TCI state for a downlink signal or a downlink channel.

If the network side configures, through the TCI state, a QCL reference signal of a target downlink channel or a target downlink signal as a reference SSB resource or a reference CSI-RS resource, and the QCL type is configured as typeA, typeB, or typeC, then the terminal device may assume that a large-scale parameter of the target downlink channel or the target downlink signal is the same as the large-scale parameter of the reference SSB resource or the reference CSI-RS resource, and the large-scale parameter is determined by the QCL type configuration. The large-scale parameter may include: a Doppler delay, an average delay, a spatial Rx parameter, etc.

If the network side configures, through the TCI state, the QCL reference signal of the target downlink channel or the target downlink signal as the reference SSB resource or the reference CSI-RS resource, and the QCL type is configured as typeD, then the terminal device may receive the target downlink signal using the same reception beam (i.e., the Spatial Rx parameter) as that for receiving the reference SSB resource or the reference CSI-RS resource. Generally, the target downlink channel or the target downlink signal is transmitted by the network side through the same TRP or the same panel or the same beam as that of the corresponding reference SSB resource or reference CSI-RS resource. If the transmission TRPs or transmission panels or transmission beams of the two downlink signals or downlink channels are different, different TCI states may be configured.

For a downlink control channel (for example, a physical downlink control channel (PDCCH)), the TCI state of the corresponding CORESET may be indicated by an RRC signaling or RRC signaling + MAC signaling.

For the downlink data channel, a set of available TCI states is indicated by an RRC signaling, and some of these TCI states are activated by an MAC layer signaling, and finally one or two TCI states, from the active TCI states, are indicated by a TCI state indication field in downlink control information (DCI) for a physical downlink shared channel (PDSCH) scheduled by the DCI. In an example, as illustrated in FIG. 3, N candidate TCI states are indicated by the RRC signaling, these N candidate TCI states constitute the set of available TCI state. K candidate TCI states are activated by the MAC layer signaling, to obtain K active TCI states. Then, one or two used TCI states, from the active TCI states, are indicated by the DCI for the PDSCH scheduled by DCI. The case of two TCI states is for a scenario similar to multiple TRPs.

In R17, a unified TCI framework based beam management mechanism includes the following two technical characteristics:

- beam indications of all uplink and downlink channels and reference signals are implemented by using a unified concept, i.e., a unified TCI state;
- the transmission beams of a UE-specific PDCCH, PDSCH, physical uplink shared channel (PUSCH), and physical uplink control channel (PUCCH) are unified into a same TCI state, and a same beam is always used for transmission of these channels. The system uses a single beam indication signaling to indicate the unified TCI state used for these transmission beams.

The unified TCI state under the unified TCI framework includes the following two modes: a joint TCI state, applicable to an uplink and downlink channels and signals; and a separate downlink (DL)/uplink (UL) TCI state, where DL TCI state is only applicable to a downlink channel and signal, and UL TCI state is only applicable to an uplink channel and signal, and in this mode, the uplink and downlink beams can be controlled separately.

The joint TCI state may be applied to a first scenario: the terminal device uses the same beam for receiving the downlink channel and the reference signal, and transmitting the uplink channel and the reference signal. In other words, the downlink beam is the same as the uplink beam. In such a scenario, the terminal device may determine the downlink beam and the uplink beam based on the downlink reference signal.

The separate DL/UL TCI state may be applied to a second scenario: the downlink transmission and uplink transmission use different beams. In an example, the terminal device needs to back-off a maximum transmit power in certain beam directions due to a maximum permissible exposure (MPE) problem, which may result in an optimal downlink beam not being an optimal uplink beam. In this case, the network side needs to indicate different beams to the uplink and downlink respectively.

One purpose for design of the unified TCI framework is to unify the transmission beams of multiple channels into a same beam. That is, the TCI state indicated to the terminal under the unified TCI framework is applied to reception or transmission of the following channels: the user-specific PDCCH and related PDSCH, PUSCH channel, and PUCCH channel. The fact whether to apply the TCI state indicated by the unified TCI framework may be selected by the base station configuration for reception or transmission of the following signals and channels: non-user-specific PDCCH and related PDSCH, an aperiodic CSI-RS signal and SRS signal for CSI measurement or beam management.

The unified TCI framework uses a manner combining the RRC, MAC CE and DCI to indicate a joint TCI state or a pair of independent downlink/uplink TCI states.

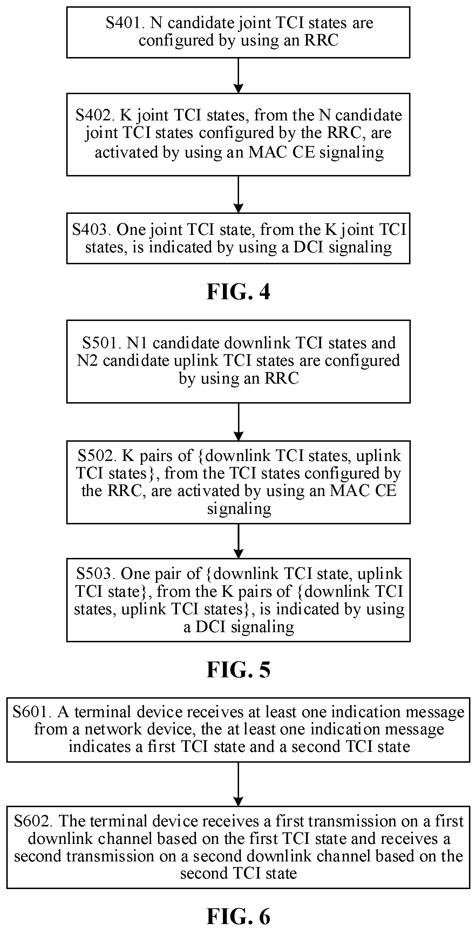

The manner for indicating the joint TCI state, as illustrated in FIG. 4, includes the following operations.

At S401: N candidate joint TCI states are configured by using an RRC.

At S402: K joint TCI states, from the N candidate joint TCI states configured by the RRC, are activated by using the MAC CE signaling, where K < = 8.

At S403: one joint TCI state, from the K joint TCI states, is indicated by using the DCI signaling.

The joint TCI state indicated by using the DCI signaling is the joint TCI state used for the current transmission.

The manner for indicating the separate TCI state, as illustrated in FIG. 5, includes the following operations.

At S501: N1 candidate downlink TCI states and N2 candidate uplink TCI states are configured by using the RRC.

At S502: K pairs of {downlink TCI states, uplink TCI states}, from the TCI states configured by the RRC, are activated by using the MAC CE signaling, where K < = 8.

At S503, one pair of {downlink TCI state, uplink TCI state}, from the K pairs of {downlink TCI states, uplink TCI states}, is indicated by using the DCI signaling.

The pair of {downlink TCI state, uplink TCI state} indicated by using the DCI signaling is a pair of TCI states used for the current transmission.

The TCI state includes two cases: being known or unknown. The TCI state is known if the following conditions are met: during a period from the last transmission of an RS resource used for a Layer 1 Reference Signal Received Power (L1-RSRP) measurement reporting for the target TCI state to completion of active TCI state switch, the RS resource for the L1-RSRP measurement is the RS in target TCI state or is QCLed (quasi co-located) with the target TCI state. Otherwise, the TCI state is considered to be unknown.

Herein: 1. TCI state switch command is received within 1280 ms upon the last transmission of the RS resource for beam reporting or measurement; 2. the UE has sent at least L1-RSRP report for the target TCI state before receiving the TCI state switch command; 3. the TCI state remains detectable during the TCI state switching period; 4. the SSB associated with the TCI state remains detectable during the TCI switching period; 5. signal to noise ratio (SNR) of the TCI state $\geq$ -3dB.

Delay requirement

For different switch commands, the following three activation configuration methods of TCI-state switch delays are supported:

an MAC-CE based TCI state switch delay;
an RRC based TCI state switch delay; and
a DCI based TCI state switch delay.

Take the MAC-CE based TCI state switch delay as an example:

- If the target TCI state is known, until a PDSCH carrying the MAC-CE activation command is received at slot n, the UE should be able to use the target TCI state of the serving cell where the TCI state switch currently occurs, and receive the PDCCH at the first slot after the slot

$$n + T_{HARQ} + 3N_{slot}^{subframe} + TO_k * \left( T_{first-SSB} + T_{SSB-proc} \right)/$$ *NR slot length.* At and before the slot

$$n + T_{HARQ} + 3N_{slot}^{subframe}$$, the UE should be able to receive the PDCCH with the old TCI state.

$T_{HARQ}$ is a timing between downlink data transmissions; $T_{first-SSB}$ is time to first SSB transmission after the MAC CE command is decoded by the UE, the SSB shall be the QCL-TypeA or QCL-TypeC to target TCI state; $T_{SSB-proc}$ = 2 ms; $TO_k$ = 1 if target TCI state is not in the active TCI state list for PDSCH, otherwise, $TO_k$ = 0.

- If the target TCI state is unknown, until a PDSCH carrying the MAC-CE activation command is received at slot n, the UE should be able to use the target TCI state of the serving cell where the TCI state switch currently occurs, and receive the PDCCH at the first slot after the slot

$$n + T_{HARQ} + 3N_{slot}^{subframe} + T_{L1-RSRP} + TO_{uk} * \left( T_{first-SSB} + T_{SSB-proc} \right)/NR \ slot \ length.$$ At and before the slot $$n + T_{HARQ} + 3N_{slot}^{subframe}$$, the UE should be able to receive the PDCCH with the old TCI state.

For $T_{L1-RSRP}$, $T_{L1-RSRP}$ = 0 in frequency (FR)1 or when the TCI state switching does not involve QCL-TypeD in FR2. Otherwise, $T_{L1-RSRP}$ is the time for Rx beam refinement in FR2. For the SSB, $T_{L1-RSRP}$ is the L1-RSRP measurement period $T_{L1-RSRP\_Measurement\_Period\_SSB}$ for the SSB, and for the CSI-RS, $T_{L1-RSRP}$ is the L1-RSRP measurement period $T_{L1-RSRP\_Measurement\_Period\_CSI-RS}$ for the CSI-RS. The L1 RSRP measurement period is associated with the period of the reference signal. For example, the SSB-based L1 RSRP measurement period is shown in Table 1, and the CSI-RS-based L1 RSRP measurement period is shown in Table 2.

Table 1. SSB-based L1 RSRP Measurement Period

| Configuration | $T_{L1-RSRP\_Measurement\_Period\_SSB}$ (ms) |
|---|---|
| Non-DRX | max($T_{Report}$, ceil(M*P*N)*$T_{SSB}$) |
| DRX cycle $\leq$ 320ms | max($T_{Report}$, ceil(1.5*M*P*N)*max ($T_{DRX}$, $T_{SSB}$)) |
| DRX cycle > 320ms | ceil(1.5*M*P*N)*$T_{DRX}$ |

Where $T_{SSB}$ is a periodicity of the SSB-Index configured for L1-RSRP measurement. $T_{Report}$ is configured periodicity for reporting.

Table 2. CSI-RS-based L1 RSRP Measurement Period

| Configuration | $T_{\text{L1-RSRP\_Measurement\_Period\_CSI-RS}}$ (ms) |
|---|---|
| Non-DRX | $\max(T_{\text{Report}}, \text{ceil}(M*P*N)*T_{\text{CSI-RS}})$ |
| DRX cycle $\leq$ 320ms | $\max(T_{\text{Report}}, \text{cell}(1.5*M*P*N)*\max(T_{\text{DRX}}, T_{\text{CSI-RS}}))$ |
| DRX cycle > 320ms | $\text{ceil}(M*P*N)*T_{\text{DRX}}$ |

Where $T_{\text{CSI-RS}}$ is a periodicity of the CSI-RS configured for L1-RSRP measurement, $T_{\text{DRX}}$ is a DRX cycle length, and $T_{\text{Report}}$ is the configured periodicity for reporting.

In Table 1 or Table 2, ceil represents rounding up.

In Table 1 or Table 2, P is a scanning factor of a beam range, representing the number of beams measured in one direction, such as 8, 4, etc.; N is an impact scaling factor, which is used for avoid collision in measurements of different reference signals, such as 3, 4, etc.

When TCI type switching involves QCL-TypeD, $TO_{uk}$ = 1 for CSI-RS based L1-RSRP measurement, and $TO_{uk}$ = 0 for SSB based L1-RSRP measurement. When TCI type switching only involves other QCL types, $TO_{uk}$ = 1.

$T_{\text{first-SSB}}$ is time to first SSB transmission after L1-RSRP measurement by the terminal when TCI type switching involves QCL-TypeD.

When TCI type switching involves other QCL types, $T_{\text{first-SSB}}$ is time to first SSB transmission after the MAC CE command is decoded by the terminal, the SSB shall be the QCL-TypeA or QCL-TypeC to the target TCI state.

In the above protocol, the scenario involving only one TCI switching is considered, and it is assumed that the UE has only one Rx beam for reception (the UE beam in the FR2 frequency band scans for 8 times, and at one of the scans, a reception is performed on the Rx beam corresponding to the configured RS index).

In the embodiments of the present disclosure, it is proposed that in a scenario in which the UE supports simultaneous reception in multiple Rx directions, the multiple Rx beam directions may correspond to a beam direction of at least one RS reference signal associated with a TCI state. In such scenario, factors such as a configuration requirement of the TCI state, a switching time requirement, and a capability of the UE need to be considered, to meet the requirements that the UE can simultaneously complete the switching of the TCI state after receiving the network configuration information, and receive the TCI state in the corresponding Rx direction at the same time.

The following technical problems are considered in the implementation of the embodiments of the present disclosure.

TCI parameter: which indicates whether serving cell indexes (servcellindex) of serving cells are the same and indicates whether SSB indexes of the SSBs or CSI-RS resource IDs of CSI-RS resources are different.

If a TCI corresponds to multiple cells, whether these cells are unknown means whether cell detection and timing tracking are required.

Even if a cell is known, it does not mean that the corresponding TCI state is known. Whether the TCI state is unknown, which means whether a L1-RSRP measurement time is required (L1-RSRP report time is not required herein), such as L1-RSRP for unknown TCI. Whether there is a unified requirement for the known or unknown state of at least one TCI state to ensure that the TCI switching time periods are the same.

Even if the TCI states are all known, it may be a situation where one TCI state is in an active TCI state list (corresponding to $TO_k$ = 0) and the other TCI state is not in the active TCI state list (corresponding to $TO_k$ = 1).

Further, types of the reference signals associated with multiple TCI states may also be different. In case that the TCI state is unknown, the L1 RSRP measurement times for different reference signals may be different, and the requirement whether additional SSB synchronization is needed will also be different ($TO_{uk}$ = 1 if the reference signal is CSI-RS).

For convenience of understanding the technical solutions of the embodiments of the disclosure, the technical solutions in the disclosure are described below through detailed embodiments. The above related technologies are used as alternative solutions, and may be combined with technical solution of the embodiments of the disclosure in various ways, and the combinations fall within the scope of the embodiments of the disclosure. The embodiments of the disclosure include at least part of the following contents.

A method for wireless communication provided in an embodiment of the disclosure applied to a terminal device is illustrated in FIG. 6 and includes the following operations.

At S601, the terminal device receives at least one indication message from a network device. The at least one indication message indicates a first TCI state and a second TCI state.

At S602, the terminal device receives a first transmission on a first downlink channel based on the first TCI state and receives a second transmission on a second downlink channel based on the second TCI state.

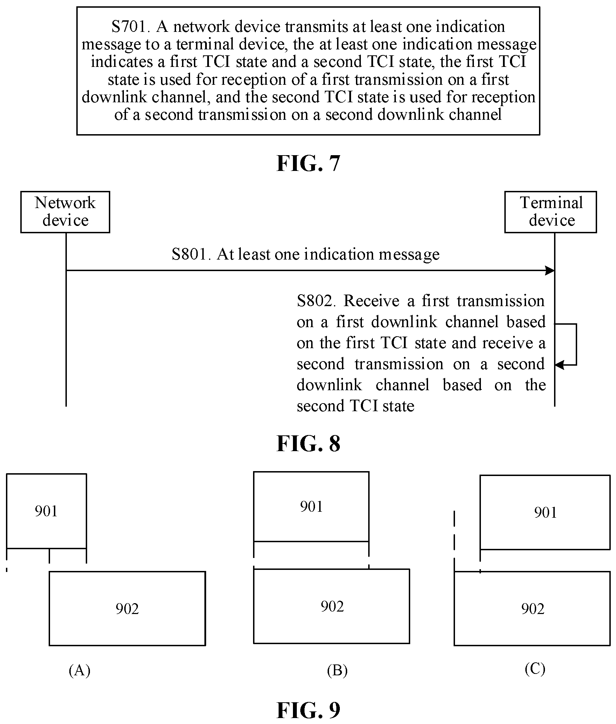

A method for wireless communication provided in the embodiments of the disclosure applied to a network device is illustrated in FIG. 7 and includes the following operations.

At S701, the network device transmits at least one indication message to a terminal device. The at least one indication message indicates a first TCI state and a second TCI state.

A method for wireless communication provided in an embodiment of the disclosure applied to a communication system including a terminal device and a network device is illustrated in FIG. 8.

At S801, the network device transmits at least one indication message to the terminal device.

At this time, the terminal device receives at least one indication message from the network device. The at least one indication message indicates a first TCI state and a second TCI state.

At S802, the terminal device receives a first transmission on a first downlink channel based on the first TCI state and receives a second transmission on a second downlink channel based on the second TCI state.

The above method for wireless communication provided in the embodiment of the disclosure is further described below.

The terminal device receives the at least one indication message from the network device. The at least one indication message indicates the first TCI state and the second TCI state.

It is understood that the TCI state may be a TCI state under a non-unified TCI framework or a unified TCI state under a unified TCI framework.

In case that the TCI state is a unified TCI state under the unified TCI framework, the mode of the unified TCI state may be a joint TCI state or a separate TCI state.

Optionally, the at least one indication message indicates the active first TCI state and the active second TCI state, in this situation, the first transmission is received on the first downlink channel by using the active first TCI state, and the second transmission is received on the second downlink channel by using the active second TCI state.

Optionally, the at least one indication message indicates the first TCI state and the second TCI state used in the active TCI states. In this situation, the first transmission is received on the first downlink channel by using the first TCI state, and the second transmission is received on the second downlink channel by using the second TCI state.

Optionally, the at least one indication message is used for indicating switching a TCI state of the first downlink channel to the first TCI state, and is used for indicating switching the TCI state of the second downlink channel to the second TCI state. In such situation, the indication message may be understood as a switching command.

In such situation, the at least one indication message indicates the terminal device to switch the TCI state of the first downlink channel and the TCI state of the second downlink channel, to switch the TCI state of the first downlink channel to the first TCI state and switch the TCI state of the second downlink channel to the second TCI state. After receiving the at least one indication message, the terminal switches the TCI state of the first downlink channel and the TCI state of the second downlink channel, to switch the TCI state of the first downlink channel to the first TCI state and switch the TCI state of the second downlink channel to the second TCI state.

After completing the switching of the TCI state of the first downlink channel and the TCI state of the second downlink channel, the terminal device receives the first transmission on the first downlink channel by using the first TCI state and receives the second transmission on the second downlink channel by using the second TCI state.

The terminal device receives the first transmission on the first downlink channel in a first direction or a first beam indicated by the first TCI state, and receives the second transmission on the second downlink channel in a second direction or a second beam indicated by the second TCI state.

The first direction or the first beam may or may not overlap with the second direction or the second beam in the direction or beam.

Optionally, the terminal device receives the first transmission by using the first TCI state and receives the second transmission by using the second TCI state at the same time. It can be understood that the operation that the terminal device receives the first transmission by using the first TCI state and receives the second transmission by using the second TCI state at the same time means that a time when the terminal device receives the first transmission on the first downlink channel may overlap with a time when the terminal device receives the second transmission on the second downlink channel.

It can be understood that the terminal device may receive downlink transmissions on multiple downlink channels in multiple reception directions or beams, and different downlink channels correspond to different reception directions or beams. The first downlink channel and the second downlink channel are any two downlink channels among the multiple downlink channels, and a reception direction or beam corresponding to a downlink channel is indicated by a TCI state of the downlink channel.

It can be understood that when the terminal device receives downlink transmissions on the multiple downlink channels in multiple reception directions or beams, the receptions of the multiple downlink transmissions by the terminal device overlap temporally.

As illustrated in FIG. 9, the time when the terminal device receives the first downlink transmission is the time period 901, and the time when the terminal device receives the second downlink transmission is the time period 902. The relationship between the time period 901 and the time period 902 may include at least one of the following cases: a starting time of the time period 901 is earlier than the starting time of the time period 902, as illustrated in FIG. 9 (A), the starting time of the time period 901 is the same as the starting time of the time period 902, as illustrated in FIG. 9 (B), or the starting time of the time period 901 is later than the starting time of the time period 902, as illustrated in FIG. 9 (C).

The fact that the terminal device receives downlink transmissions on multiple downlink channels in multiple reception directions or beams at the same time may be also be understood as that the terminal device receives downlink signals in the multiple reception directions or beams at the same time. The downlink signal is a signal carrying a downlink channel.

Optionally, the downlink channel includes at least one of a PDCCH or a PDSCH.

Taking the terminal device receiving two downlink transmissions on two downlink channels at the same time as an example, the terminal device receives a downlink transmission 1 on a downlink channel 1 in a reception direction 1 indicated by a TCI state 1, and receives a downlink transmission 2 on a downlink channel 2 in a reception direction 2 indicated by a TCI state 2. After receiving a TCI state A for the downlink channel 1 and a TCI state B for the downlink channel 2 from the network device, the terminal device switches the TCI state of the downlink channel 1 to the TCI state A and switches the TCI state of the downlink channel 2 to the TCI state B. Then the terminal device receives the downlink transmission 1 and the downlink transmission 2 at the same time after the switching of the TCI state of the downlink channel 1 and the switching of the TCI state of the downlink channel 2 are completed, and the terminal device receives the downlink transmission 1 in a reception direction A indicated by the TCI state A and receives the downlink transmission 2 in a reception direction B indicated by the TCI state B.

Taking the terminal device receiving three downlink transmissions on three downlink channels at the same time as an example, the terminal device receives a downlink transmission 1 on a downlink channel 1 in a reception direction 1 indicated by a TCI state 1, receives a downlink transmission 2 on a downlink channel 2 in a reception direction 2 indicated by a TCI state 2, and receives a downlink transmission 3 on a downlink channel 3 in a reception direction 3 indicated by a TCI state 3. After receiving a TCI state A for the downlink channel 1, a TCI state B for the downlink channel 2 and a TCI state C for the downlink channel 3 from the network device, the terminal device switches the TCI state of the downlink channel 1 to the TCI state A, switches the TCI state of the downlink channel 2 to the TCI state B, and switches the TCI state of the downlink channel 3 to the TCI state C. Then the terminal device receives the downlink transmission 1, the downlink transmission 2 and the downlink transmission 3 at the same time after the switching of the TCI state of the downlink channel 1, the switching of the TCI state of the downlink channel 2 and the switching of the TCI state of the downlink channel 3 are completed, and the terminal device receives the downlink transmission 1 in a reception direction A indicated by the TCI state A, receives the downlink transmission 2 in a reception direction B indicated by the TCI state B, and receives the downlink transmission 3 in a reception direction C indicated by the TCI state C.

According to the above method for wireless communication provided in the embodiments of the present disclosure, when the first TCI state and the second TCI state are indicated by the network device to the terminal device, the terminal device receives the first transmission on the first downlink channel in the first direction corresponding to the first TCI state and the second transmission on the second downlink channel in the second direction corresponding to the second TCI state at the same time. Therefore, the terminal device receives downlink data in multiple directions corresponding to multiple TCI states at the same time, to achieve simultaneous reception in multiple directions.

In some embodiments, the at least one indication message is used for simultaneously triggering switching of a TCI state of the first downlink channel and switching of a TCI state of the second downlink channel.

In this situation, the terminal device starts simultaneously the switching of the TCI state of the first downlink channel and the switching of the TCI state of the second downlink channel based on the at least one indication message.

Herein, a duration (i.e., a switch delay) required to switch the TCI state of the first downlink channel is a first switch delay, and the first switch delay is determined based on the first TCI state. A duration (i.e., a switch delay) required to switch the TCI state of the second downlink channel is a second switch delay, and the second switch delay is determined based on the first TCI state. The first switch delay may be or may not be the same as the second switch delay.

In an embodiment of the disclosure, the switch delay of a TCI state is determined based on factors such as whether the TCI state is known, a time length required for processing, and a parameter acquisition time.

Optionally, the at least one indication message includes one indication message or two indication messages.

In an embodiment of the disclosure, the indication message for indicating switching of the TCI state of the downlink channel may be understood as a switching command.

Taking the at least one indication message including one indication message as an example, the at least one indication message includes a first indication message, and the first indication message includes a first indication field indicating the first TCI state and a second indication field indicating the second TCI state.

The first indication message includes two information fields (a first indication field and a second indication field) indicating two TCI states, respectively, so that the switching of the TCI state of the first downlink channel and the switching of the TCI state of the second downlink channel are indicated simultaneously through one indication message, namely, the first indication message.

Taking the at least one indication message including two indication messages as an example, the at least one indication message includes a second indication message and a third indication message. The second indication message indicates the first TCI state and the third indication message indicates the second TCI state.

Optionally, there is no restriction on sequence of the reception time for the second indication message and the reception time of the second indication message.

The second indication message and the third indication message indicate the first TCI state and the second TCI state, respectively, therefore, TCI states corresponding to different downlink channels are indicated through different indication messages.

Optionally, the first information field includes first TCI configuration information indicating the first TCI state, and the second information field includes second TCI configuration information indicating the first TCI state. Optionally, a signaling type of the second indication message is the same as or different from a signaling type of the third indication message.

Optionally, when the signaling type of the second indication message is the same as the signaling type of the third indication message, the second indication message and the third indication message are simultaneously transmitted to the terminal device.

Optionally, in case that the first TCI state is indicated by the second indication message and the second TCI state is indicated by the third indication message, a difference between reaching times of the second indication message and the third indication message may be determined by an uncertain parameter. When the uncertain parameter has a value of 0, the second indication message and the third indication message are simultaneously reached.

In an example, DCI 1 and DCI 2 are used for indicating the first TCI state and the second TCI state, respectively. When DCI 1 and DCI 2 are transmitted through a same MAC CE, the certain parameter corresponding to DCI 1 and DCI 2 has a value of 0, and DCI 1 and DCI 2 simultaneously reach the terminal device, and the terminal device receives the second indication message and the third indication message at the same time.

Optionally, a signaling type of the switching command includes at least one of: an RRC signaling; an MAC CE; or a DCI.

In an embodiment of the disclosure, on a basis that the at least one indication message includes one indication message or two indication messages, and when the at least one indication message includes multiple indication messages, the signaling types of different indication messages are the same or different, the at least one indication message may include at least one of:

    one DCI which indicates TCI states including the first TCI state and the second TCI state;
    two DCIs which indicate the first TCI state and the second TCI state, respectively;
    one RRC signaling which indicates TCI states including the first TCI state and the second TCI state; or
    one MAC CE which indicates TCI states including the first TCI state and the second TCI state.

It is noted that, in manners of the TCI state indication illustrated in FIGS. 4 to 6, the RRC indicates candidate TCI states, and the MAC CE indicates active TCI states. Herein, the TCI states indicated by the RRC signaling or MAC CE are used TCI states, and the number of indicated TCIs is the same as the number of downlink channels in which the TCI states need to be switched.

Optionally, the at least one indication message further indicates at least one of the following pieces of information associated with the first TCI state: a serving cell, a reference signal or a QCL type.

Optionally, the at least one indication message further indicates at least one of the following pieces of information associated with the second TCI state: a serving cell, a reference signal or a QCL type.

Herein, the serving cell may be indicated by a serving cell ID, and the reference signal may be indicated by a reference signal index or an index of a reference signal resource.

In some embodiments, a relationship between the information associated with the first TCI state and the information associated with the second TCI state includes at least one of the following relationships.

In a first relationship, a serving cell associated with the first TCI state is the same as or different from a serving cell associated with the second TCI state.

In a second relationship, a type of a reference signal associated with the first TCI state is the same as or different from a type of a reference signal associated with the second TCI state.

In an embodiment of the disclosure, in consideration of combinations of the first relationship and the second relationship, the first serving cell and the type of the first reference signal (RS) and the second serving cell and the type of the second RS may include one of the following situations:

    the first serving cell is the same as the second serving cell, and the type of the first RS is the same as the type of the second RS.
    the first serving cell is the same as the second serving cell, and the type of the first RS is different from the type of the second RS.
    the first serving cell is different from the second serving cell, and the type of the first RS is the same as the type of the second RS; or

the first serving cell is different from the second serving cell, and the type of the first RS is different from the type of the second RS.

Herein, the first serving cell is a serving cell associated with the first TCI state, the second serving cell is a serving cell associated with the first TCI state, the first RS is an RS associated with the first TCI state, and the second RS is an RS associated with the second TCI state. The first RS is an RS of the first serving cell, and the second RS is an RS of the second serving cell.

For the situation where the first RS of the first TCI state is different from the second RS of the second TCI state, or the first RS and the second RS are not the same RS:

When the first serving cell is the same as the second serving cell and the type of the first RS is the same as the type of the second RS, the index of the first RS is different from the index of the second RS.

When the first serving cell is different from the second serving cell and the type of the first RS is the same as the type of the second RS, the index of the first RS is the same as or different from the index of the second RS.

When the first serving cell is the same as or different from the second serving cell and the type of the first RS is different from the type of the second RS, then the first RS is different from the second RS.

Optionally, the condition for the serving cell associated with the first TCI state being different from the serving cell associated with the second TCI state in the first relationship includes the following first condition.

In the first condition, the terminal device has a capability of simultaneous switching of different TCI states associated with different serving cells.

The fact that the terminal device meets the first condition is that the terminal device supports a first capability, i.e., simultaneous switching of different TCI states associated with different serving cells, then the first serving cell may be the same as or different from the second serving cell.

When the terminal device does not meet the first condition, i.e., the terminal device does not support the first capability, then the first serving cell is the same as the second serving cell, that is, the first serving cell and the second serving cell are the same cell.

Optionally, the condition for the type of the reference signal associated with the first TCI state being different from the type of the reference signal associated with the second TCI state in the second relationship includes the following second condition.

In the second condition, the terminal device has a capability of simultaneous switching of different TCI states associated with different types of the reference signals.

The fact that the terminal device meets the second condition is that the terminal device supports a second capability, i.e., simultaneous switching of different TCI states associated with different types of the reference signals. The type of the first RS may be the same as or different from the type of the second RS.

When the terminal device does not meet the second condition, i.e., the terminal device does not support the second capability, the type of the first RS is the same as the type of the second RS.

Optionally, the type of the reference signal includes at least one of: an SSB, or a CSI-RS.

In an embodiment of the disclosure, whether or not the terminal device supports the first or second capability may be determined by the implementation of itself, or may be configured by the network device. In case that whether the terminal device supports the first or second capability is determined by the implementation of itself, the terminal device may report whether it supports the first or second capability to the network device, so that the network device may know whether the terminal device supports the first or second capability, and thus may determine the first TCI state and the second TCI state.

In some embodiments of the disclosure, the switching of the TCI state of the first downlink channel and the switching of the TCI state of the second downlink channel are temporally overlapped.

The temporal overlap between the switching of the TCI state of the first downlink channel and the switching of the TCI state of the second downlink channel may also be partial.

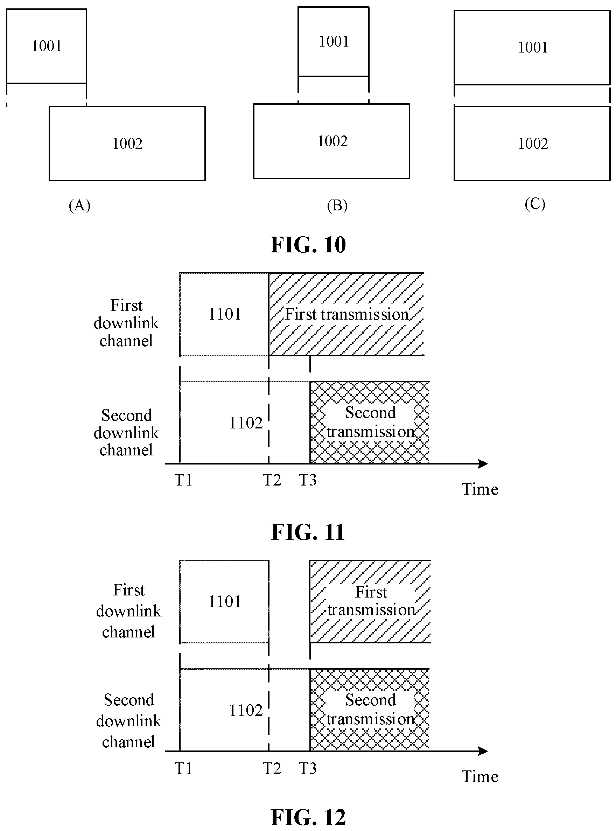

FIG. 10 is an example of a temporal relationship between switching of the TCI state of the first downlink channel and switching of the TCI state of the second downlink channel, in which a time period 1001 is used for the switching of the TCI state of the first downlink channel and a time period 1002 is used for the switching of the TCI state of the second downlink channel. In FIG. 10 (A) and FIG. 10 (B), the time period 1001 and the time period 1002 are partially overlapped, and in FIG. 10 (C), the time period 1001 and the time period 1002 are completely overlapped. In FIG. 10, the length of the time period 1001 is the first switch delay, and the length of the time period 1002 is the second switch delay.

In some embodiments, in consideration that whether the terminal device supports a capability of simultaneously performing switching of the TCI state and reception of the downlink transmission, i.e., a third capability, the terminal device may allow to simultaneously perform switching of the TCI state and reception of the downlink transmission, or may allow to simultaneously perform switching of the TCI state and reception of the downlink transmission.

If the terminal device supports the third capability, that is, the terminal device allows to simultaneously perform the switching of the TCI state and reception of the downlink transmission, then the terminal device allows, when the switching of the TCI state of the first downlink channel is completed but the switching of the TCI state of the second downlink channel has not been completed, to receive the first transmission based on the first TCI state while performing switching of the TCI state of the second downlink channel, until the switching of the TCI state of the second downlink channel is completed, and the terminal device receives the first transmission on the first downlink channel and the second transmission on the second downlink channel at the same time.

In an example, as illustrated in FIG. 11, the terminal device starts to switch the TCI state of the first downlink channel and to switch the TCI state of the second downlink channel at time T1, the switching of the TCI state of the first downlink channel occupies a time period 1101. The switching of the TCI state of the first downlink channel is completed at time T2. However, at the time T2, the switching of the TCI state of the second downlink channel has not been completed, at this time, the terminal device starts to receive the first transmission on the first downlink channel at time T2 and continues switching of the TCI state of the second downlink channel. The switching of the TCI state of the second downlink channel occupies a time period 1102, and the switching of the TCI state of the second downlink channel is completed at time T3, and the terminal device starts to receive the second transmission on the second downlink channel at the time T3. Therefore, the terminal device receives the first transmission and the second transmission simultaneously after time T3. Herein, in FIG. 11, a length of the time period 1101 is the first switch delay, and a length of the time period 1102 is the second switch delay.

If the terminal device does not support the third capability, that is, the terminal device does not allow to simultaneously perform switching of the TCI state and reception of the downlink transmission, the terminal device does not allow, when the switching of the TCI state of the first downlink channel is completed but the switching of the TCI state of the second downlink channel has not been completed, to receive the first transmission based on the first TCI state while performing switching of the TCI state of the second downlink channel.

Optionally, if the terminal device does not support the third capability, the terminal device starts to receive the first transmission and the second transmission at the same time.

The fact that the terminal device starts to receive the first transmission and the second transmission at the same time may be understood as that the terminal device starts to receive the first transmission and to receive the second transmission simultaneously.

If the terminal device does not support the third capability, when the switching of the TCI state of the first downlink channel is completed by the terminal device but the switching of the TCI state of the second downlink channel has not been completed, the terminal device waits for the switching of the TCI state of the second downlink channel. When both the switching of the TCI state of the first downlink channel and the switching of the TCI state of the second downlink channel are completed, the terminal device starts to receive the first transmission on the first downlink channel and the second transmission on the second downlink channel at the same time.

In an example, as illustrated in FIG. 12, the terminal device starts to switch the TCI state of the first downlink channel and to switch the TCI state of the second downlink channel at time T1, the switching of the TCI state of the first downlink channel occupies a time period 1101. The switching of the TCI state of the first downlink channel is completed at time T2. However, at the time T2, the switching of the TCI state of the second downlink channel has not been completed, at this time, the terminal device continues switching of the TCI state of the second downlink channel. The switching of the TCI state of the second downlink channel occupies a time period 1102, and the switching of the TCI state of the second downlink channel is completed at time T3, and the terminal device simultaneously starts to receive the first transmission on the first downlink channel and to receive the second transmission on the second downlink channel at the time T3.

It is noted that, in FIG. 11 or FIG. 12, a starting time of the TCI state switching of the first downlink channel is the same as a starting time of the TCI state switching of the second downlink channel, and in practical applications, the starting time of the TCI state switching of the first downlink channel may be different from the starting time of the TCI state switching of the second downlink channel.

Optionally, if the terminal device supports the third capability, after the switching of the TCI state of the first downlink channel and the switching of the TCI state of the second downlink channel are completed, the terminal device starts to receive the first transmission and the second transmission at the same time; alternatively, when the switching of the TCI state of the first downlink channel is completed but the switching of the TCI state of the second downlink channel has not been completed, the terminal device may also receive the first transmission and switch the TCI state of the second downlink channel simultaneously.

Optionally, if the terminal device does not support the third capability, only after the switching of the TCI state of the first downlink channel and the switching of the TCI state of the second downlink channel are completed, the terminal device may start to receive the first transmission and the second transmission at the same time.

In some embodiments, a requirement that the terminal device starts to receive the first transmission and the second transmission at the same time includes at least one of the following requirements:

the terminal device has no capability of performing switching of the TCI state and reception of the downlink transmission simultaneously;

the terminal device receives first indication information from the network device, and the first indication information indicates that the terminal device has no capability of simultaneously performing switching of the TCI state and reception of the downlink transmission; or

the terminal device transmits second indication information to the network device, and the second indication information indicates that the terminal device has no capability of simultaneously performing switching of the TCI state and reception of the downlink transmission.

Optionally, the first indication information may be indicated by an indication message or may be indicated by another message independent of the indication message.

In some embodiments, if the terminal device starts to switch the TCI state of the first downlink channel and switch the TCI state of the second downlink channel at the same time and starts to receive the first transmission and the second transmission at the same time, then a first time is separated from a second time by a first duration. The first time is a time when the terminal device receives the at least one indication message, and the second time is a time when the terminal device, after completing switching of the TCI state, starts to receive the first downlink channel and the second downlink channel at the same time.

The first time includes at least one of:

a time when a first indication message of the at least one indication message is received; or
a time when the terminal device completes reception of the at least one indication message.

Optionally, the at least one indication message includes one indication message, or the at least one indication message includes two indication messages and the two indication messages are reached simultaneously, such that switching of the TCI state of the first downlink channel and switching of the TCI state of the second downlink channel are started at the same time.

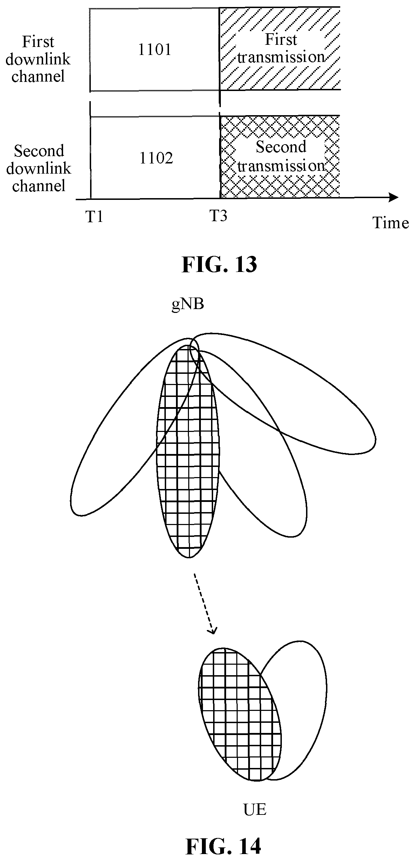

As illustrated in FIG. 12 or FIG. 13, the first time is a time when the at least one indication message is received, that is, the time T1 when the switching of the TCI state is started, and the second time is the time T3 when reception of the first transmission and reception of the second transmission are started at the same time, the first duration is a time length of an interval between the time T3 and the time T1.

In an embodiment of the disclosure, a relationship between the first switch delay and the second switch delay includes:

a relationship A: the first switch delay is the same as the second switch delay; and
a relationship B: the first switch delay is different from the second switch delay.

In the relationship A, the first switch delay is the same as the second switch delay. The first switch delay lasts for the first duration, the first switch delay is a delay for TCI state switching corresponding to the first TCI state, and the second switch delay is a delay for TCI state switching corresponding to the second TCI state.

If the time period required for the TCI state switching of the first downlink channel is the same as the time period required for the TCI state switching of the second downlink channel, the TCI state switching of the first downlink channel and the TCI switching of the second downlink channel are completed simultaneously, and the terminal device starts to receive the first transmission and the second transmission at the same time.

In an example, as illustrated in FIG. 13, the terminal device starts to switch the TCI state of the first downlink channel and to switch the TCI state of the second downlink channel at time T1. The switching of the TCI state of the first downlink channel occupies the time period 1101, and a duration of the time period 1101 is the first switch delay. The switching of the TCI state of the first downlink channel occupies the time period 1102, a duration of the time period 1102 is the second switch delay, and the duration of the time period 1201 is the same as the duration of the time period 1202. Therefore, the switching of the TCI state of the first downlink channel and the switching of the TCI state of the second downlink channel are completed at time T3, and the terminal device simultaneously starts to receive the first transmission on the first downlink channel and to receive the second transmission on the second downlink channel at the time T3.

Optionally, if the first switch delay and the second switch delay satisfy the relationship A, the first TCI state and the second TCI state satisfy at least one of the following constraints:

constraint A: both the first TCI state and the second TCI state are known or unknown;
constraint B: both the first TCI state and the second TCI state are included or not included in an active TCI state list;
constraint C: a type of a reference signal associated with the first TCI state is the same as a type of a reference signal associated with the second TCI state; or
constraint D: a first measurement time for measuring a reference signal corresponding to the first TCI state is the same as a second measurement time for measuring a reference signal corresponding to the second TCI state.

In an embodiment of the disclosure, a calculation method of the TCI switch delay of the TCI state which includes the first TCI state and the second TCI state may refer to agreements in the protocol, which will not be elaborated herein again.

For the restriction A, if the first TCI state and the second TCI state satisfy the restriction A, the calculation method of the first switch delay is the same as that of the second switch delay, and then the first switch delay and the second switch delay can be effectively controlled.

In an embodiment of the disclosure, when the TCI state is known, the cell and the RS associated with the TCI state have been configured and measured within a certain time period. Optionally, a method for determining the certain time period includes at least one of: network configuration; determination based on a configuration period of the RS; or a pre-configured value. Among them, the pre-configured value may be 1280 ms or other time lengths.

For a known TCI state, the reception direction or beam corresponding to the TCI state is known, and there is no need to perform LI-RSRP measurement on the RS of the TCI state to determine the reception direction or beam corresponding to the TCI state.

For an unknown TCI state and when the QCL type is QCL type A or QCL type C, the large-scale parameter of the unknown TCI state is the same as the large-scale parameter of the RS, and there is no need to perform LI-RSRP measurement on the RS to determine the optimal reception direction or beam of the RS.

For an unknown TCI state and when the QCL type is QCL type D, the reception direction or beam of the unknown TCI state is the same as the reception direction or beam of the RS, and it is necessary to perform LI-RSRP measurement on the RS to determine the optimal reception direction or beam of the RS. Optionally, the optimal reception direction or beam of the RS is the reception direction or beam with the highest RSRP.

For the restriction B, if the first TCI state and the second TCI state satisfy the restriction B, a value of $TO_k$ corresponding to the first TCI state is the same as that corresponding to the second TCI state, which can ensure that the first switch delay is the same as the second switch delay.

For the restriction C, if the first TCI state and the second TCI state satisfy the restriction C, a value of $TO_{uk}$ corresponding to the first TCI state is the same as that corresponding to the second TCI state, which can effectively control the first switch delay to be the same as the second switch delay.

For the restriction D, if the first TCI state and the second TCI state satisfy the restriction D, a value of $T_{L1\text{-}RSRP}$ corresponding to the first switch delay is the same as that corresponding to the second switch delay, which can effectively control the first switch delay to be the same as the second switch delay.

Optionally, if both the first TCI state and the second TCI state are known and the first TCI state and the second TCI state satisfy the restriction B, then the first switch delay is the same as the second switch delay.

Optionally, if both the first TCI state and the second TCI state are unknown and the first TCI state and the second TCI state satisfy the restrictions C and D, then the first switch delay is the same as the second switch delay.

It is noted that when the first switch delay is the same as the second switch delay, the first TCI state and the second TCI state may not need to satisfy one or more of the restrictions A to D. However, when the first TCI state and the second TCI state can satisfy one or more of the restrictions A to D, a probability that the first switch delay is the same as the second switch delay is greater.

For the relationship B, the first duration is a larger one between the first switch delay and the second switch delay, the first switch delay is a delay for TCI state switching corresponding to the first TCI state, and the second switch delay is a delay for TCI state switching corresponding to the second TCI state.

Herein, the first switch delay is greater than the second switch delay, and the first duration is the first switch delay, therefore, when the switching corresponding to the first downlink channel is completed and the TCI switching corresponding to the second downlink channel has not been completed, the terminal device waits for both the switching corresponding to first downlink channel and the switching corresponding to the second downlink channel are completed and then starts to receive the first transmission and the second transmission.

In an example, as illustrated in FIG. 12, the terminal device completes the switching of the TCI state of the first downlink channel at time T2. However, at the time T2, the switching of the TCI state of the second downlink channel has not been completed, at this time, the terminal device continues the switching of the TCI state of the second downlink channel. The switching of the TCI state of the second downlink channel occupies the time period 1102, and the switching of the TCI state of the second downlink channel is completed at time T3. Therefore, both the switching of the TCI state of the first downlink channel and the switching of the TCI state of the second downlink channel are completed at the time T3, and the terminal device simultaneously starts to receive the first transmission on the first downlink channel and to receive the second transmission on the second downlink channel at the time T3. In FIG. 13, the first duration is a duration required for the first switch delay, i.e., an interval between time T1 and time T3.

Optionally, in case that the first switch delay is different from the second switch delay, both the first TCI state and the second TCI state are known; or, both the first TCI state and the second TCI state are unknown; or, one of the first TCI state and the second TCI state is known and the other one is unknown.

Optionally, in case that the first switch delay is different from the second switch delay:

both the first TCI state and the second TCI state are included in an active TCI state list; or

both the first TCI state and the second TCI state are not included in an active TCI state list; or

one of the first TCI state and the second TCI state is included in an active TCI state list and the other one of the first TCI state and the second TCI state is not included in the active TCI state list.

Optionally, in the case that the first switch delay is different from the second switch delay: a first measurement time for measuring a reference signal corresponding to the first TCI state is the same as or different from a second measurement time for measuring a reference signal corresponding to the second TCI state.

In the case that the first switch delay is different from the second switch delay, there is no need to restrict the first TCI state and the second TCI state by any of the restrictions A to D, such that the switching modes of the first TCI state and the second TCI state can be more flexible.

The method for wireless communication provided in the embodiments of the disclosure is further described below.

An embodiment of the disclosure provides a solution in which the UE supports simultaneous switching of at least two TCI states and simultaneous reception in multiple Rx directions, and the solution includes the following features:

1) configuration mode of the TCI state;

2) scenario where the TCIs are switched simultaneously; and

3) UE capability and requirements of simultaneous switching of TCI states and simultaneous reception in the corresponding Rx directions that the UE meet.

The description takes two TCI states an example below.

For 1), the configuration mode of simultaneous switching of two TCI states (base station side) is described as follows.

First example: the TCI information field indicated in one DCI indicates two TCI states, and one DCI indicates switching of two TCIs.

Second example: the TCI information fields indicated in two DCIs indicates two TCI states respectively, and two DCIs simultaneously trigger switching of two indicated TCIs.

Third example: the MAC-CE or RRC signaling directly triggers simultaneous switching of two TCI states. In this situation, only two TCI states are configured in the MAC-CE or RRC signaling, and the switching is directly activated.

In addition, R16 supports configuration of one group of two DL TCIs, while R17 supports unified TCI states for a group of UL and DL pair. The TCI indicated herein should apply to both situations.

Taking the unified TCI framework as an example, a manner combining the RRC, MAC CE and DCI to indicate a joint TCI state or a pair of downlink/uplink TCI states includes the following operations:

- firstly, a set of TCI states is configured by using the RRC, a set of joint TCI states are configured by using the RRC in case of a joint TCI mode; and a set of downlink TCI states and a set of uplink TCI states are configured by using RRC in case of a separate TCI mode.
- secondly, one or more TCI states are activated, from the set of TCI states configured by the RRC, by using the MAC CE signaling, in the joint TCI mode, K joint TCI states are activated by the MAC CE signaling and K < = 8; and in the separate TCI mode, K pairs of {downlink TCI states, uplink TCI states} are activated by the MAC CE signaling and K < = 8.
- one TCI state or a pair of TCI states used for the current transmission is indicated from the K joint TCI states or the K pairs of {downlink TCI states, uplink TCI states} by the DCI signaling.

For 2), in the scenario where two TCI states are switched simultaneously, two direction information indications respectively associated with the two TCI states are described as follows.

All QCL relationships are of QCL type D, which represents that the Rx direction needs to be adjusted to be consistent with the RS beam. Herein, other QCL relationships are not excluded (in this situation, it is understood that the TCI state switching does not change the reception beam direction).

First example: cell indexes are the same, RSs are different.

Second example: cell indexes are the same, types of the RSs are the same, RS indexes are different.

Third example: cell indexes are different, RSs are the same (the RSs indexes may be the same or different).

Fourth example: cell indexes are different, RSs are different (the RSs indexes may be the same or different).

If the cell indexes of the two TCI states are the same, as illustrated in FIG. 14, the UE receives beams from different TRPs of the same cell at the same time.

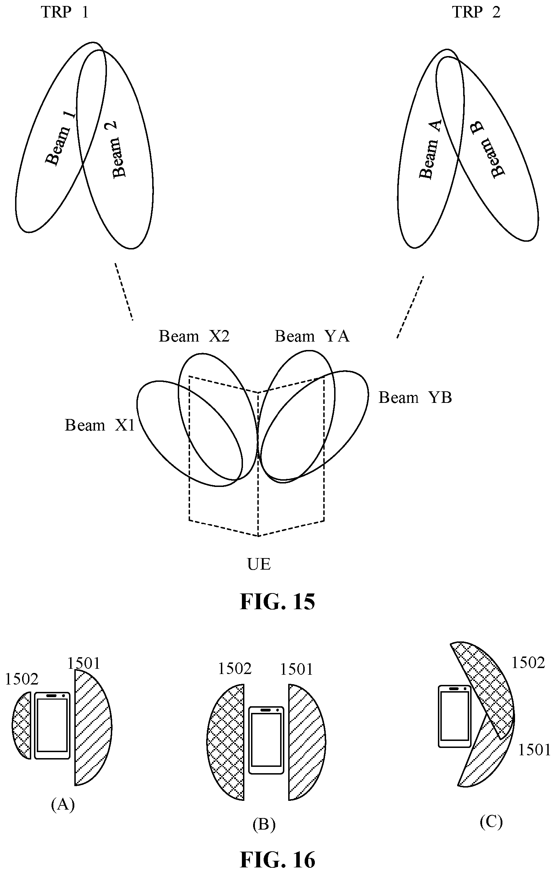

If the cell indexes of the two TCI states are different, as illustrated in FIG. 15, the UE receives beams from different TRPs or different cells at the same time. The transmission beams of TRP1 includes beam 1 and beam 2, and the transmission beams of TRP2 includes beam A and beam B, thus the terminal device receives signals transmitted by the TRP1 through beam X1 and beam X2, and receives signals transmitted by the TRP2 through beam XA and beam XB.

For 3), the UE capability of supporting simultaneous switching of multiple TCI states and simultaneous reception in the corresponding multiple Rx directions (having multiple Rx directions, i.e., having multiple reception beams/panels) is determined by a radio frequency capability. The multiple Rx directions may be overlapped.

When the terminal device supports simultaneous reception in multiple Rx directions, different Rx directions may be realized by different antennas, different antennas have different spatial coverage, and the different antennas have different angles-of-arrival (AOAs). As illustrated in FIG. 16, the spatial coverage 1501 and the spatial coverage 1502 are implemented based on different antennas and correspond to different AOAs. The relationship between the spatial coverage 1501 and the spatial coverage 1502 may include: the spatial coverage 1501 and the spatial coverage 1502 having different sizes and being not overlapped, as shown in FIG. 16 (A); the spatial coverage 1501 and the spatial coverage 1502 having the same size and being not overlapped, as shown in FIG. 16 (B), and the spatial coverage 1501 and the spatial coverage 1502 having the same size and being overlapped, as shown in FIG. 16 (C).

Another UE capability is a UE capability that supports simultaneous reception in one or more Rx directions after one TCI state is switched.

Under the premise of a high capability, the requirements for the UE capability are divided based on scenarios in point 2) above (TCI state switch delay with dual TCI (serving cell ID, SSB/CSI-RS Index):

a capability that whether the beam direction corresponding to Rx (that is, the TCI state) is associated with RSs of different cells is supported; and
a capability that whether the beam direction corresponding to Rx (that is, the TCI state) is associated with different RSs is supported.

Whether the UE can meet the requirement of completing the switching within the same time period for switching of multiple TCI states (the switch delays are the same):

- for the same cell indexes, the same RSs and the different RS indexes, the switch delay requirements are the same;
- for the same cell indexes and the different RSs, the switch delay requirements are the same; and
- for the different cell indexes and the same or different RSs, the switch delay requirements are the same.

First example: if both configured RSs associated with two TCI states use SSB, both measurement periods of SSB1 and SSB2 are 80ms, and the corresponding cell or two cells, i.e., cell1/cell2 have been measured in the previous period (1280 ms) and the TCI states are also used previously (known), then the beam directions corresponding to SSB1 and SSB2 are known. Then the UE does not need to perform L1 RSRP measurement, and the time periods for switching of TCIs may be the same. After that, when the UE may receive the SSBs in the Rx beam directions of the aforementioned SSB 1 and SSB 2, the UE may perform timing synchronization first and then receive data or the like.

Herein, $T_{first\text{-}SSB}$ in the switching time period is a measurement timing time of the SSB corresponding to the cell where the data channel is located. Since the beam direction is known, the corresponding QCL type of the RS in the TCI state may only be QCL-TypeA or QCL-TypeC.

Second example: if both configured RSs associated with two TCI states use SSB, the measurement periods of SSB1 and SSB2 are 80ms, and the corresponding cell or two cells (i.e., cell1/cell2) have been measured (known) but the TCI state has not used (unknown TCI state & QCL-TypeA or QCL-TypeC), then the UE does not need to perform L1 RSRP measurements for the SSB1 and SSB2, since the beam directions do not need to be changed and only the QCL typeD needs to be received through the beam direction associated with the RS. After that, the UE may receive data (such as PDSCH or PDCCH) or the like in the old Rx beam direction.

Herein, $T_{first\text{-}SSB}$ in the switching time period is a measurement timing time of the SSB corresponding to the cell where the data channel is located. The corresponding QCL relationship between the measurement timing time and the SSB1 and SSB2 of the TCI state is QCL-TypeA or QCL-TypeC (which uses the old TCI beam direction).

Third example: if both configured RSs associated with two TCI states use SSB, the measurement periods of SSB1 and SSB2 are 80ms, and the corresponding cell or two cells (i.e., cell1/cell2) have been measured (known) but the TCI state has not used (unknown TCI & QCL-TypeD), then the UE needs to perform L1 RSRP measurements for the SSB1 and SSB2, the RS resource for L1-RSRP measurement is the RS in target TCI state or QCLed to the target TCI state. After that, the UE may receive data (such as PDSCH or PDCCH) or the like in the new Rx beam directions of SSB1 and SSB2.

Herein, $T_{first\text{-}SSB}$ in the switching time period is a measurement timing time of the SSB corresponding to the cell where the data channel is located. The corresponding QCL relationship between the measurement timing time and the SSB1 and SSB2 of the TCI state may be configured as QCL Type D (i.e., a newly configured TCI beam direction).

In particular:

- whether or not the corresponding TCI state is already known or unknown, the multiple TCI states need to be unified as known;
- when all the TCI states are unknown, the configuration periods of the corresponding RSs (which may be of the same cell or different cells) need to be the same, or multiple RSs use a unified period for measurement calculation.

Fourth example: the UE capability needs to meet the requirements of simultaneous switching of TCIs and simultaneous reception. The TCIs are defined to be known, that is, the associated cells and RSs have been configured and measured within a certain time period.

Herein, the "certain time period" may be configured by the network and may be determined by a configuration period of a certain parameter or reference signal; or may be a pre-configured value such as 1280 ms.

Similarly, it is also possible to restrict a group of TCI states that are switched simultaneously to be associated with the same type of reference signals (SSB or CSI-RS); and/or it is also possible to restrict a group of TCI states that are switched simultaneously all to be in the active TCI list or not in the TCI list.

Fifth example: if a group of TCI states that are switched simultaneously are not restricted to have the same known condition or the same type of reference signal, or are all in the active TCI list, then the required switching time period is determined according to the worst situation (i.e. the longest switch delay of a TCI state). Specifically, if it is required to switch two TCI states at the same time, one of the two TCI states is known and the other one is unknown, then the switching may be made based on switching time period of the unknown TCI.

Compared with the protocol requirement in which only one TCI state switching is considered and the UE performs reception only in one Rx beam, the embodiments of the present disclosure solves a problem that the UE supports simultaneous reception in multiple Rx directions, and provides solutions for configuration requirements of the TCI state, switching time requirements, capabilities of the UE, etc., so as to meet the requirement that the UE can simultaneously complete the switching of the TCI states and simultaneously perform reception in the corresponding Rx directions after receiving the network configuration information. Therefore, the UE can adjust the beam reception more quickly and flexibly, and the adjustment time is also reduced.

Preferred embodiments of the disclosure have been described in detail with reference to the accompanying drawings, however, the disclosure is not limited to the specific details of the above embodiments. Various simple modifications may be made to the technical solution of the present disclosure within the scope of the technical conception of the disclosure, and these simple modifications all fall within the scope of protection of the present disclosure. For example, various specific technical features described in the above specific embodiments may be combined in any suitable manner without contradiction, and various possible combinations are not further described in the disclosure in order to avoid unnecessary repetition. For another example, various implementations of the disclosure may also be combined in any manner as long as the combination does not depart from the idea of the disclosure and it is also be considered as the disclosure of the disclosure. For another example, various embodiments described in the disclosure and/or the technical features in the various embodiments may be combined with the prior art in any manner on the premise of no conflict, and the combined technical solution should also fall within the scope of protection of the disclosure.

It should be understood that in various method embodiments of the disclosure, the magnitude of the sequence number of the above-mentioned processes does not mean the order of execution, and the order of execution of each process is determined by its function and inherent logic, and should not be limited in any way to the implementation process of the embodiments of the disclosure. Further, in embodiments of the disclosure, the terms "downlink", "uplink" and "sidelink" are used for representing transmission directions of signals or data. The term "downlink" is used for representing that the transmission direction of signals or data is a first direction from a site to UE of a cell, the term "uplink" is used for representing that the transmission direction of signals or data is a second direction from the UE of the cell to the site, and the term "sidelink" is used for representing that the transmission direction of signals or data is a third direction from a first UE to a second UE. For example, the "downlink signal" means that the transmission direction of the signal is the first direction. In addition, in the embodiments of the disclosure, the term "and/or" is only an association relationship for describing the associated objects, and represents that three relationships may exist. Specifically, A and/or B may represent the following three cases: A exists separately, both A and B exist, and B exists separately. In addition, the character "/" in this specification generally indicates an "or" relationship between the associated objects.

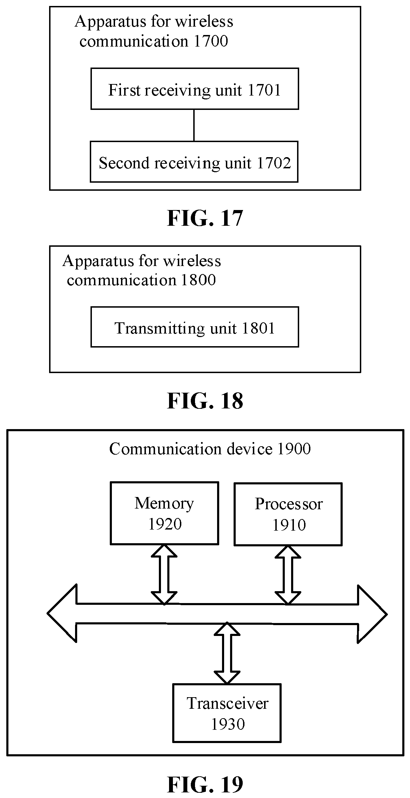

FIG. 17 is a first schematic diagram of structure of apparatus for wireless communication provided in an embodiment of the disclosure. The apparatus is applied to a terminal device, and as illustrated in FIG. 17, the apparatus 1700 for wireless communication includes a first receiving unit 1701 and a second receiving unit 1702.

The first receiving unit 1701 is configured to receive at least one indication message from a network device. The at least one indication message indicates a first TCI state and a second TCI state.

The second receiving unit 1702 is configured to receive a first transmission on a first downlink channel based on the first TCI state, and receive a second transmission on a second downlink channel based on the second TCI state.

In some embodiments, the at least one indication message is used for simultaneously triggering switching of a TCI state of the first downlink channel and switching of a TCI state of the second downlink channel.

In some embodiments, the at least one indication message includes a first indication message, and the first indication message includes a first indication field indicating the first TCI state and a second indication field indicating the second TCI state.

In some embodiments, the at least one indication message includes a second indication message and a third indication message, the second indication message indicates the first TCI state and the third indication message indicates the second TCI state. In some embodiments, a signaling type of the second indication message is the same as or different from a signaling type of the third indication message.

In some embodiments, when the signaling type of the second indication message is the same as the signaling type of the third indication message, the second indication message and the third indication message are simultaneously transmitted to the terminal device.

In some embodiments, the signaling type of the indication message includes at least one of: an RRC signaling; an MAC CE; or a DCI.

In some embodiments, the at least one indication message further indicates at least one of the following pieces of information associated with the first TCI state: a serving cell, a reference signal or a QCL type.

In some embodiments, the at least one indication message further indicates at least one of the following pieces of information associated with the second TCI state: a serving cell, a reference signal or a QCL type.

In some embodiments, a serving cell associated with the first TCI state is the same as or different from a serving cell associated with the second TCI state.

In some embodiments, a condition that the serving cell associated with the first TCI state is different from the serving cell associated with the second TCI state includes:
the terminal device has a capability of simultaneous switching of different TCI states, each of the different TCI states is associated with a different serving cell.

In some embodiments, a type of a reference signal associated with the first TCI state is the same as or different from a type of a reference signal associated with the second TCI state.

In some embodiments, a condition that the type of the reference signal associated with the first TCI state is different from the type of the reference signal associated with the second TCI state includes:
the terminal device has a capability of simultaneous switching of different TCI states, each of the different TCI states is associated with a different type of the reference signal.

In some embodiments, the type of the reference signal includes at least one of: an SSB, or a CSI-RS.

In some embodiments, switching of a TCI state of the first downlink channel and switching of a TCI state of the second downlink channel are temporally overlapped.

In some embodiments, the terminal device is allowed to simultaneously perform switching of a TCI state and reception of a downlink transmission.

In some embodiments, the terminal device is not allowed to simultaneously perform switching of a TCI state and reception of a downlink transmission.

In some embodiments, the terminal device starts to receive the first transmission and the second transmission at the same time.

In some embodiments, a requirement that the terminal device starts to receive the first transmission and the second transmission at the same time includes at least one of the following requirements.

The terminal device has no capability of simultaneously performing switching of the TCI state and reception of the downlink transmission.

The terminal device receives first indication information from the network device, and the first indication information indicates that the terminal device has no capability of simultaneously performing switching of the TCI state and reception of the downlink transmission.

The terminal device transmits second indication information to the network device, and the second indication information indicates that the terminal device has no capability of simultaneously performing switching of the TCI state and reception of the downlink transmission.

In some embodiments, if the terminal device starts to switch the TCI state of the first downlink channel and the TCI state of the second downlink channel at the same time and starts to receive the first transmission and the second transmission at the same time, a first time is separated from a second time by a first duration. The first time is a time when the terminal device receives the at least one indication message, and the second time is a time when the terminal device, after performing switching of the TCI state, starts to receive the first transmission and the second transmission at the same time.

In some embodiments, a first switch delay is the same as a second switch delay, the first switch delay lasts for the first duration, the first switch delay is a delay for TCI state switching corresponding to the first TCI state, and the second switch delay is a delay for TCI state switching corresponding to the second TCI state.

In some embodiments, the first TCI state and the second TCI state satisfy at least one of the following constraints:

both the first TCI state and the second TCI state are known or unknown;
both the first TCI state and the second TCI state are included or not included in an active TCI state list;
a type of a reference signal associated with the first TCI state is the same as a type of a reference signal associated with the second TCI state; or
a first measurement time for measuring a reference signal corresponding to the first TCI state is the same as a second measurement time for measuring a reference signal corresponding to the second TCI state.

In some embodiments, a first switch delay is different from a second switch delay, and the first duration is a larger one between the first switch delay and the second switch delay, the first switch delay is a delay for TCI state switching corresponding to the first TCI state, and the second switch delay is a delay for TCI state switching corresponding to the second TCI state.

In some embodiments:

both the first TCI state and the second TCI state are known; or
both the first TCI state and the second TCI state are unknown; or
one of the first TCI state and the second TCI state is known and the other one of the first TCI state and the second TCI state is unknown.

In some embodiments:

both the first TCI state and the second TCI state are included in an active TCI state list; or
both the first TCI state and the second TCI state are not included in an active TCI state list; or
one of the first TCI state and the second TCI state is included in an active TCI state list and the other one of the first TCI state and the second TCI state is not included in the active TCI state list.

In some embodiments, a type of a reference signal associated with the first TCI state is the same as or different from a type of a reference signal associated with the second TCI state.

FIG. 18 is a second schematic diagram of structure of apparatus for wireless communication provided in an embodiment of the disclosure. The apparatus is applied to a network device, and as illustrated in FIG. 18, the apparatus 1800 for wireless communication includes a transmitting unit 1801.

The transmitting unit 1801 is configured to transmit at least one indication message to a terminal device. The at least one indication message indicates a first TCI state and a second TCI state, the first TCI state is used for reception of a first transmission on a first downlink channel, and the second TCI state is used for reception of a second transmission on a second downlink channel.

In some embodiments, the at least one indication message is used for simultaneously triggering switching of a TCI state of the first downlink channel and switching of a TCI state of the second downlink channel.

In some embodiments, the at least one indication message includes a first indication message, and the first indication message includes a first indication field indicating the first TCI state and a second indication field indicating the second TCI state.

In some embodiments, the at least one indication message includes a second indication message and a third indication message, the second indication message indicates the first TCI state and the third indication message indicates the second TCI state.

In some embodiments, a signaling type of the second indication message is the same as or different from a signaling type of the third indication message.

In some embodiments, when the signaling type of the second indication message is the same as the signaling type of the third indication message, the second indication message and the third indication message are simultaneously transmitted to the terminal device.

In some embodiments, the signaling type of the switching command includes at least one of: an RRC signaling; an MAC CE; or a DCI.

In some embodiments, the at least one indication message further indicates at least one of the following pieces of information associated with the first TCI state: a serving cell, a reference signal or a QCL type.

In some embodiments, the at least one indication message further indicates at least one of the following pieces of information associated with the second TCI state: a serving cell, a reference signal or a QCL type.

In some embodiments, a serving cell associated with the first TCI state is the same as or different from a serving cell associated with the second TCI state.

In some embodiments, a condition that the serving cell associated with the first TCI state is different from the serving cell associated with the second TCI state includes:
the terminal device has a capability of simultaneous switching of different TCI states, the different TCI states are associated with different serving cells.

In some embodiments, a type of a reference signal associated with the first TCI state is the same as or different from a type of a reference signal associated with the second TCI state.

In some embodiments, a condition that the type of the reference signal associated with the first TCI state is different from the type of the reference signal associated with the second TCI state includes:

the terminal device has a capability of simultaneous switching of different TCI states, the different TCI states are associated with different types of the reference signals.

In some embodiments, the type of the reference signal includes at least one of: an SSB, or a CSI-RS.

In some embodiments, a first switch delay is the same as a second switch delay, the first switch delay is a delay for TCI state switching corresponding to the first TCI state, and the second switch delay is a delay for TCI state switching corresponding to the second TCI state.

In some embodiments, the first TCI state and the second TCI state satisfy at least one of the following constraints:

both the first TCI state and the second TCI state are known or unknown;
both the first TCI state and the second TCI state are included or not included in an active TCI state list;
a type of a reference signal associated with the first TCI state is the same as a type of a reference signal associated with the second TCI state; or
a first measurement time for measuring a reference signal corresponding to the first TCI state is the same as a second measurement time for measuring a reference signal corresponding to the second TCI state.

In some embodiments, a first switch delay is different from a second switch delay, the first switch delay is a delay for TCI state switching corresponding to the first TCI state, and the second switch delay is a delay for TCI state switching corresponding to the second TCI state.

In some embodiments, both the first TCI state and the second TCI state are known; or

both the first TCI state and the second TCI state are unknown; or
one of the first TCI state and the second TCI state is known and the other one of the first TCI state and the second TCI state is unknown.

In some embodiments, both the first TCI state and the second TCI state are included in an active TCI state list; or

both the first TCI state and the second TCI state are not included in an active TCI state list; or
one of the first TCI state and the second TCI state is included in an active TCI state list and the other one of the first TCI state and the second TCI state is not included in the active TCI state list.

In some embodiments, a type of a reference signal associated with the first TCI state is the same as or different from a type of a reference signal associated with the second TCI state.

It should be understood by a person of ordinary skill in the art that the relevant description of the above apparatus for wireless communication in the embodiments of the disclosure may be understood with reference to relevant description of the method for wireless communication in the embodiments of the disclosure.

FIG. 19 is a schematic structural diagram of a communication device 1900 according to an embodiment of the disclosure. The communication device may be a terminal device or a network device. The communication device 1900 illustrated in FIG. 19 includes a processor 1910. The processor 1910 may be configured to call a computer program from a memory and run the computer program to perform the method according to the embodiments of the disclosure.

Optionally, as illustrated in FIG. 19, the communication device 1900 may further include a memory 1920. The processor 1910 may be configured to call the computer program from the memory 1920 and run the computer program to perform the method according to the embodiments of the disclosure.

The memory 1920 may be a separate device independent from the processor 1910, or may be integrated in the processor 1910.

Optionally, as illustrated in FIG. 19, the communication device 1900 may further include a transceiver 1930. The processor 1910 may control the transceiver 1930 to communicate with other devices, specifically, to transmit information or data to other devices, or receive information or data from other devices.

The transceiver 1930 may include a transmitter and a receiver. The transceiver 1930 may further include an antenna, and there may be one or more antennas.

Optionally, the communication device 1900 may specifically be a network device in embodiments of the disclosure. The communication device 1900 may perform corresponding processes that are implemented by the network device in various methods of the embodiments of the disclosure. For brevity, details are not elaborated herein again.

Optionally, the communication device 1900 may specifically be a mobile terminal/terminal device in embodiments of the disclosure. The communication device 1900 may implement corresponding processes that are implemented by the mobile terminal/terminal device in various methods of the embodiments of the disclosure. For brevity, details are not elaborated herein again.

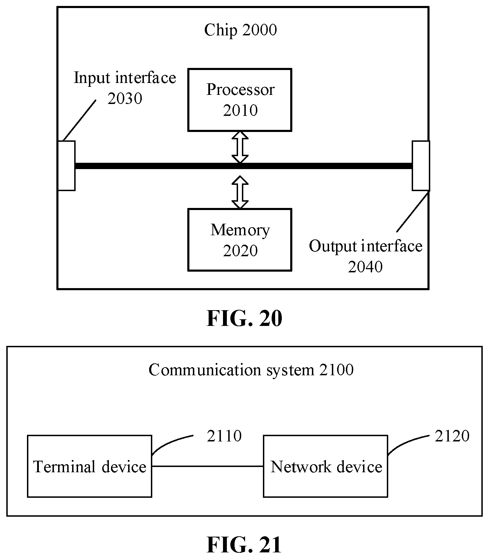

FIG. 20 is a schematic structural diagram of a chip according to an embodiment of the disclosure. The chip 2000 illustrated in FIG. 20 includes a processor 2010. The processor 2010 may be configured to call a computer program from a memory and run the computer program to perform the method according to an embodiment of the disclosure.

Optionally, as illustrated in FIG. 20, the chip 2000 may further include a memory 2020. The processor 2010 may be configured to call the computer program from the memory 2020 and run the computer program to perform the method according to the embodiments of the disclosure.

The memory 2020 may be a separate device independent from the processor 2010, or may be integrated in the processor 2010.

Optionally, the chip 2000 may further include an input interface 2030. The processor 2010 may control the input interface 2030 to communicate with other devices or chips, specifically, to obtain information or data from other devices or chips.

Optionally, the chip 2000 may further include an output interface 2040. The processor 2010 may control the output interface 840 to communicate with other devices or chips, specifically, to output information or data to other devices or chips.

Optionally, the chip may be applied to a network device in embodiments of the disclosure. The chip may perform corresponding processes that are performed by the network device in various methods of the embodiments of the disclosure. For brevity, details are not elaborated herein again.

Optionally, the chip may be applied to a mobile terminal/terminal device in embodiments of the disclosure. The chip may implement corresponding processes that are implemented by the mobile terminal/terminal device in various methods of the embodiments of the disclosure. For brevity, details are not elaborated herein again.

It should be understood that, the chip mentioned in the embodiments of the disclosure may be also referred to as a system-level chip, a system chip, a chip system or a chip of a system-on-chip, etc.

FIG. 21 is a schematic block diagram of a communication system 2100 provided in an embodiment of the disclosure. As illustrated in FIG. 21, the communication system 2100 includes a terminal device 2110 and a network device 2120.

The terminal device 2110 may be configured to implement corresponding functions that are implemented by the terminal device of the above method. The network device 2120 may be configured to implement corresponding functions that are implemented by the network device of the above method. For brevity, details are not elaborated herein again.

It should be understood that, the processor in the embodiments of the disclosure may be an integrated circuit chip having a signal processing capability. During implementation, the steps of the foregoing method embodiments may be implemented by using a hardware integrated logic circuit in the processor or implemented by using instructions in a software form. The foregoing processor may be a general purpose processor, a digital signal processor (DSP), an application-specific integrated circuit (ASIC), a field programmable gate array (FPGA) or another programmable logical device, discrete gate or transistor logical device, or discrete hardware component. The processor may implement or perform methods, operations and logical block diagrams disclosed in the embodiments of the disclosure. The general purpose processor may be a microprocessor or the processor may be any conventional processor and the like. Operations of the methods disclosed with reference to the embodiments of the disclosure may be directly executed and completed by means of a hardware decoding processor, or may be executed and completed by using a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, or a register. The storage medium is located in the memory, and the processor reads information from the memory and completes the operations in the foregoing methods in combination with hardware of the processor.

It can be understood that, the memory in the embodiments of the disclosure may be a volatile memory or a non-volatile memory, or may include both a volatile memory and a non-volatile memory. The non-volatile memory may be an ROM, a PROM, an erasable PROM (EPROM), an electrically EPROM (EEPROM) or a flash memory. The volatile memory may be an RAM and is used as an external cache. Through exemplary but not limited description, many forms of RAMs may be used, for example, a static RAM (SRAM), a dynamic RAM (DRAM), a synchronous DDRAM (SDRAM), a double data rate SDRAM (DDR SDRAM), an enhanced SDRAM (ESDRAM), a synch link DRAM (SLDRAM) and a direct random RAM (DR RAM). It should be noted that, the memory of the system and the method described herein aims to include but not limit these memories and any other suitable types of memories.

It should be understood that, the foregoing memory is exemplary but not limited description. For example, the memory in the embodiments of the disclosure may be an SRAM, a DRAM, an SDRAM, a DDR SDRAM, an ESDRAM, an SLDRA and a DR RAM, etc. It should be noted that, the memory in the embodiments of the disclosure aims to include but not limit these memories and any other suitable types of memories.

An embodiment of the disclosure further provides a computer-readable storage medium configured to store a computer program.

Optionally, the computer-readable storage medium may be applied to a network device in embodiments of the disclosure, and the computer program causes a computer to perform corresponding processes that are implemented by the network device in various methods of the embodiments of the disclosure. For brevity, details are not elaborated herein again.

Optionally, the computer-readable storage medium may be applied to a mobile terminal/terminal device in embodiments of the disclosure, and the computer program causes a computer to perform corresponding processes that are implemented by the mobile terminal/terminal device in various methods of the embodiments of the disclosure. For brevity, details are not described herein again.

An embodiment of the disclosure further provides a computer program product including computer program instructions.

Optionally, the computer program product may be applied to a network device in embodiments of the disclosure, and the computer program instructions cause a computer to perform corresponding processes that are implemented by the network device in various methods of the embodiments of the disclosure. For brevity, details are not described herein again.

Optionally, the computer program product may be applied to a mobile terminal/terminal device in embodiments of the disclosure, and the computer program instructions cause a computer to perform corresponding processes that are implemented by the mobile terminal/terminal device in various method of the embodiments of the disclosure. For brevity, details are not described herein again.

An embodiment of the disclosure further provides a computer program.

Optionally, the computer program may be applied to a network device in embodiments of the disclosure, the computer program, when run by a computer, causes the computer to perform corresponding processes that are implemented by the network device in various methods of the embodiments of the disclosure. For brevity, details are not described herein again.

Optionally, the computer program may be applied to a mobile terminal/terminal device in embodiments of the disclosure, the computer program, when executed by a computer, causes the computer to perform corresponding processes that are implemented by the mobile terminal/terminal device in various methods of the embodiments of the disclosure. For brevity, details are not described herein again.

A person of ordinary skill in the art may be aware that, in combination with the examples described in the embodiments disclosed in this specification, units and algorithm operations may be implemented by electronic hardware, or a combination of computer software and electronic hardware. Whether the functions are performed by hardware or software depends on particular applications and design constraint conditions of the technical solutions. Those skilled in the art may use different methods to implement the described functions for each particular application, but it should not be considered that the implementation goes beyond the scope of this application.

It may be clearly understood by those skilled in the art that, for the purpose of convenient and brief description, the detailed working process of the foregoing system, apparatus, and units may refer to the corresponding process in the foregoing method embodiments, and details are not described herein again.

In the several embodiments provided in this disclosure, it should be understood that the disclosed system, device, and method may be implemented in other manners. For example, the described apparatus embodiments are merely exemplary. For example, the unit division is merely a logical function division and there may be other divisions in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may be or may not be physically separate, and parts displayed as units may be or may not be physical units, they may be located in one position, or may be distributed on multiple network units. Some or all of the units may be selected according to actual needs to achieve the objectives of the solutions of the embodiments.

In addition, functional units in the embodiments of this disclosure may be integrated into one processing unit, or each of the units may exist alone physically, or two or more units are integrated into one unit.

When the functions are implemented in form of a software functional module and sold or used as an independent product, the functions may be stored in a computer-readable storage medium. Based on such an understanding, the technical solutions of this application essentially, or the part contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the operations of the method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the protection scope of the claims.

**Claims**

1. A method for wireless communication, comprising:

   receiving, by a terminal device, at least one indication message from a network device, the at least one indication message indicating a first transmission configuration indication (TCI) state and a second TCI state; and
   receiving, by the terminal device, a first transmission on a first downlink channel based on the first TCI state, and receiving a second transmission on a second downlink channel based on the second TCI state.

2. The method of claim 1, wherein the at least one indication message is used for simultaneously triggering switching of a TCI state of the first downlink channel and switching of a TCI state of the second downlink channel.

3. The method of any one of claims 1 and 2, wherein the at least one indication message comprises a first indication message, and the first indication message comprises a first indication field indicating the first TCI state and a second indication field indicating the second TCI state.

4. The method of any one of claims 1 and 2, wherein the at least one indication message comprises a second indication message and a third indication message, the second indication message indicates the first TCI state and the third indication message indicates the second TCI state.

5. The method of claim 4, wherein a signaling type of the second indication message is the same as or different from a signaling type of the third indication message.

6. The method of claim 5, wherein when the signaling type of the second indication message is the same as the signaling type of the third indication message, the second indication message and the third indication message are simultaneously transmitted to the terminal device.

7. The method of any one of claims 1 to 6, wherein a signaling type of the indication message comprises at least one of:

   a radio resource control (RRC) signaling;
   a medium access control control element (MAC CE); or
   downlink control information (DCI).

8. The method of any one of claims 1 to 7, wherein the at least one indication message further indicates at least one of the following pieces of information associated with the first TCI state: a serving cell, a reference signal or a quasi co-located (QCL) type.

9. The method of any one of claims 1 to 8, wherein the at least one indication message further indicates at least one of the following pieces of information associated with the second TCI state: a serving cell, a reference signal or a QCL type.

10. The method of any one of claims 1 to 9, wherein a serving cell associated with the first TCI state is the same as or different from a serving cell associated with the second TCI state.

11. The method of claim 10, wherein a condition that the serving cell associated with the first TCI state is different from the serving cell associated with the second TCI state comprises:
    the terminal device has a capability of simultaneous switching of different TCI states, the different TCI states being associated with different serving cells.

12. The method of any one of claims 1 to 11, wherein a type of a reference signal associated with the first TCI state is the same as or different from a type of a reference signal associated with the second TCI state.

13. The method of claim 12, wherein a condition that the type of the reference signal associated with the first TCI state is different from the type of the reference signal associated with the second TCI state comprises:
the terminal device has a capability of simultaneous switching of different TCI states, the different TCI states being associated with different types of the reference signals.

14. The method of any one of claims 8, 9 12 and 13, wherein a type of the reference signal comprises at least one of:

    a synchronization signal block (SSB); or
    a channel state indicator reference signal (CSI-RS).

15. The method of any one of claims 1 to 14, wherein switching of a TCI state of the first downlink channel and switching of a TCI state of the second downlink channel are temporally overlapped.

16. The method of any one of claims 1 to 15, wherein the terminal device is allowed to simultaneously perform switching of a TCI state and reception of a downlink transmission.

17. The method of any one of claims 1 to 15, wherein the terminal device is not allowed to simultaneously perform switching of a TCI state and reception of a downlink transmission.

18. The method of claim 16 or 17, wherein the terminal device starts to receive the first transmission and the second transmission at the same time.

19. The method of any one of claim 18, wherein a requirement that the terminal device starts to receive the first transmission and the second transmission at the same time comprises at least one of:

    the terminal device has no capability of performing switching of the TCI state and reception of the downlink transmission simultaneously;
    the terminal device receives first indication information from the network device, and the first indication information indicates that the terminal device has no capability of simultaneously performing switching of the TCI state and reception of the downlink transmission; or
    the terminal device transmits second indication information to the network device, and the second indication information indicates that the terminal device has no capability of simultaneously performing switching of the TCI state and reception of the downlink transmission.

20. The method of any one of claims 18 and 19, wherein if the terminal device starts to switch the TCI state of the first downlink channel and the TCI state of the second downlink channel at the same time and starts to receive the first transmission and the second transmission at the same time, a first time is separated from a second time by a first duration, wherein the first time is a time when the terminal device receives the at least one indication message, and the second time is a time when the terminal device, after performing switching of the TCI state, starts to receive the first transmission and the second transmission at the same time.

21. The method of claim 20, wherein
a first switch delay is the same as a second switch delay, wherein the first switch delay lasts for the first duration, the first switch delay is a delay for TCI state switching corresponding to the first TCI state, and the second switch delay is a delay for TCI state switching corresponding to the second TCI state.

22. The method of claim 21, wherein the first TCI state and the second TCI state satisfy at least one of the following constraints:

    both the first TCI state and the second TCI state are known or unknown;
    both the first TCI state and the second TCI state are comprised or not comprised in an active TCI state list;
    a type of a reference signal associated with the first TCI state is the same as a type of a reference signal associated with the second TCI state; or
    a first measurement time for measuring a reference signal corresponding to the first TCI state is the same as a second measurement time for measuring a reference signal corresponding to the second TCI state.

23. The method of claim 20, wherein a first switch delay is different from a second switch delay, and wherein the first duration is a larger one between the first switch delay and the second switch delay, the first switch delay is a delay for TCI state switching corresponding to the first TCI state, and the second switch delay is a delay for TCI state switching corresponding to the second TCI state.

24. The method of claim 23, wherein

both the first TCI state and the second TCI state are known; or
both the first TCI state and the second TCI state are unknown; or
one of the first TCI state and the second TCI state is known and the other one of the first TCI state and the second TCI state is unknown.

25. The method of claim 23, wherein

both the first TCI state and the second TCI state are comprised in an active TCI state list; or
both the first TCI state and the second TCI state are not comprised in an active TCI state list; or
one of the first TCI state and the second TCI state is comprised in an active TCI state list and the other one of the first TCI state and the second TCI state is not comprised in the active TCI state list.

26. The method of claim 23, wherein
a type of a reference signal associated with the first TCI state is the same as or different from a type of a reference signal associated with the second TCI state.

27. A method for wireless communication, comprising:
transmitting, by a network device, at least one indication message to a terminal device, the at least one indication message indicating a first transmission configuration indication (TCI) state and a second TCI state, wherein the first TCI state is used for reception of a first transmission on a first downlink channel, and the second TCI state is used for reception of a second transmission on a second downlink channel.

28. The method of claim 27, wherein the at least one indication message is used for simultaneously triggering switching of a TCI state of the first downlink channel and switching of a TCI state of the second downlink channel.

29. The method of claim 27 or 28, wherein the at least one indication message comprises a first indication message, and the first indication message comprises a first indication field indicating the first TCI state and a second indication field indicating the second TCI state.

30. The method of claim 27 or 28, wherein the at least one indication message comprises a second indication message and a third indication message, the second indication message indicates the first TCI state and the third indication message indicates the second TCI state.

31. The method of claim 30, wherein a signaling type of the second indication message is the same as or different from a signaling type of the third indication message.

32. The method of claim 31, wherein when the signaling type of the second indication message is the same as the signaling type of the third indication message, the second indication message and the third indication message are simultaneously transmitted to the terminal device.

33. The method of any one of claims 27 to 32, wherein a signaling type of the indication message comprises at least one of:

a radio resource control (RRC) signaling;
a medium access control control element (MAC CE); or
downlink control information (DCI).

34. The method of any one of claims 27 to 33, wherein the at least one indication message further indicates at least one of the following pieces of information associated with the first TCI state: a serving cell, a reference signal or a quasi co-located (QCL) type.

35. The method of any one of claims 27 to 33, wherein the at least one indication message further indicates at least one of the following pieces of information associated with the second TCI state: a serving cell, a reference signal or a QCL type.

36. The method of any one of claims 27 to 35, wherein a serving cell associated with the first TCI state is the same as or different from a serving cell associated with the second TCI state.

37. The method of any one of claims 27 to 35, wherein a condition that a serving cell associated with the first TCI state is different from a serving cell associated with the second TCI state comprises:
the terminal device has a capability of simultaneous switching of different TCI states, the different TCI states being associated with different serving cells.

38. The method of any one of claims 27 to 37, wherein a type of a reference signal associated with the first TCI state is the same as or different from a type of a reference signal associated with the second TCI state.

39. The method of claim 38, wherein a condition that the type of the reference signal associated with the first TCI state is different from the type of the reference signal associated with the second TCI state comprises:
the terminal device has a capability of simultaneous switching of different TCI states, the different TCI states being associated with different types of the reference signals.

40. The method of any one of claims 34, 35, 38 and 39, wherein a type of the reference signal comprises at least one of:

    a synchronization signal block (SSB); or
    a channel state indicator reference signal (CSI-RS).

41. The method of claim any one of claims 27 to 40, wherein a first switch delay is the same as a second switch delay, the first switch delay is a delay for TCI state switching corresponding to the first TCI state, and the second switch delay is a delay for TCI state switching corresponding to the second TCI state.

42. The method of claim 41, wherein the first TCI state and the second TCI state satisfy at least one of the following constraints:

    both the first TCI state and the second TCI state are known or unknown;
    both the first TCI state and the second TCI state are comprised or not comprised in an active TCI state list;
    a type of a reference signal associated with the first TCI state is the same as a type of a reference signal associated with the second TCI state; or
    a first measurement time for measuring a reference signal corresponding to the first TCI state is the same as a second measurement time for measuring a reference signal corresponding to the second TCI state.

43. The method of claim any one of claims 27 to 40, wherein a first switch delay is different from a second switch delay, the first switch delay is a delay for TCI state switching corresponding to the first TCI state, and the second switch delay is a delay for TCI state switching corresponding to the second TCI state.

44. The method of claim 43, wherein

    both the first TCI state and the second TCI state are known; or
    both the first TCI state and the second TCI state are unknown; or
    one of the first TCI state and the second TCI state is known and the other one of the first TCI state and the second TCI state is unknown.

45. The method of claim 43, wherein

    both the first TCI state and the second TCI state are comprised in an active TCI state list; or
    both the first TCI state and the second TCI state are not comprised in an active TCI state list; or
    one of the first TCI state and the second TCI state is comprised in an active TCI state list and the other one of the first TCI state and the second TCI state is not comprised in the active TCI state list.

46. The method of claim 43, wherein
a type of a reference signal associated with the first TCI state is the same as or different from a type of a reference signal associated with the second TCI state.

47. An apparatus for wireless communication, comprising:

a first receiving unit, configured to receive at least one indication message from a network device, the at least one indication message indicating a first transmission configuration indication (TCI) state and a second TCI state; and a second receiving unit, configured to receive a first transmission on a first downlink channel based on the first TCI state, and receive a second transmission on a second downlink channel based on the second TCI state.

48. An apparatus for wireless communication apparatus, comprising:

a transmitting unit, configured to transmit at least one indication message to a terminal device, the at least one indication message indicating a first transmission configuration indication (TCI) state and a second TCI state, wherein the first TCI state is used for reception of a first transmission on a first downlink channel, and the second TCI state is used for reception of a second transmission on a second downlink channel.

49. A terminal device, comprising a processor and a memory for storing a computer program, wherein the processor is configured to call the computer program stored in the memory and run the computer program to execute the method of any one of claims 1 to 26.

50. A network device, comprising a processor and a memory for storing a computer program, wherein the processor is configured to call the computer program stored in the memory and run the computer program to execute the method of any one of claims 27 to 46.

51. A chip, comprising a processor configured to call a computer program from a memory and run the computer program to cause a device equipped with the chip to perform the method of any one of claims 1 to 26.

52. A chip, comprising a processor configured to call a computer program from a memory and run the computer program, to cause a device equipped with the chip to perform the method of any one of claims 27 to 46.

53. A computer-readable storage medium having stored thereon a computer program, the computer program causing a computer to perform the method of any one of claims 1 to 26.

54. A computer-readable storage medium having stored thereon a computer program, the computer program causing a computer to perform the method of any one of claims 27 to 46.

55. A computer program product, comprising computer program instructions, the computer program instructions causing a computer to perform the method of any one of claims 1 to 26.

56. A computer program product, comprising computer program instructions, the computer program instructions causing a computer to perform the method of any one of claims 27 to 46.

57. A computer program, wherein the computer program is run by a computer to perform the method of any one of claims 1 to 26.

58. A computer program, wherein the computer program is run by a computer to perform the method of any one of claims 27 to 46.

100

130

110

120

110

**FIG. 1**

| Serving cell ID | | CORESET ID | Oct 1 |
|---|---|---|---|
| COR ESET ID | TCI state ID | | Oct 1 |

**FIG. 2**

RRC
↓

N candidate TCI states

MAC
↓

K active TCI states

DCI
↓

One or two used TCI states

**FIG. 3**

S401. N candidate joint TCI states are configured by using an RRC

S402. K joint TCI states, from the N candidate joint TCI states configured by the RRC, are activated by using an MAC CE signaling

S403. One joint TCI state, from the K joint TCI states, is indicated by using a DCI signaling

**FIG. 4**

S501. N1 candidate downlink TCI states and N2 candidate uplink TCI states are configured by using an RRC

S502. K pairs of {downlink TCI states, uplink TCI states}, from the TCI states configured by the RRC, are activated by using an MAC CE signaling

S503. One pair of {downlink TCI state, uplink TCI state}, from the K pairs of {downlink TCI states, uplink TCI states}, is indicated by using a DCI signaling

**FIG. 5**

S601. A terminal device receives at least one indication message from a network device, the at least one indication message indicates a first TCI state and a second TCI state

S602. The terminal device receives a first transmission on a first downlink channel based on the first TCI state and receives a second transmission on a second downlink channel based on the second TCI state

**FIG. 6**

S701. A network device transmits at least one indication message to a terminal device, the at least one indication message indicates a first TCI state and a second TCI state, the first TCI state is used for reception of a first transmission on a first downlink channel, and the second TCI state is used for reception of a second transmission on a second downlink channel

**FIG. 7**

| Network device | | Terminal device |
|---|---|---|

S801. At least one indication message

S802. Receive a first transmission on a first downlink channel based on the first TCI state and receive a second transmission on a second downlink channel based on the second TCI state

**FIG. 8**

| 901 | | 901 | | 901 |
|---|---|---|---|---|
| 902 | | 902 | | 902 |
| (A) | | (B) | | (C) |

**FIG. 9**

**FIG. 10**

**FIG. 11**

**FIG. 12**

First
downlink
channel

1101

First
transmission

Second
downlink
channel

1102

Second
transmission

T1          T3          Time

**FIG. 13**

gNB

UE

**FIG. 14**

**FIG. 15**

(A)  (B)  (C)

**FIG. 16**

Apparatus for wireless
communication 1700

First receiving unit 1701

Second receiving unit 1702

**FIG. 17**

Apparatus for wireless
communication 1800

Transmitting unit 1801

**FIG. 18**

Communication device 1900

Memory
1920

Processor
1910

Transceiver
1930

**FIG. 19**

Chip 2000

Input interface
2030

Processor
2010

Memory
2020

Output interface
2040

**FIG. 20**

Communication system 2100

2110

Terminal device

2120

Network device

**FIG. 21**

## INTERNATIONAL SEARCH REPORT

| International application No. |
|---|
| **PCT/CN2022/111562** |

| A. | CLASSIFICATION OF SUBJECT MATTER |
|---|---|

H04L5/00(2006.01)i; H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN: 传输配置指示, TCI, 状态, 第一, 第二, 切换, RRC, 配置, 指示, transmission configuration indicator, state, first, second, switch, configur+, indicat+

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | CN 113825229 A (HUAWEI TECHNOLOGIES CO., LTD.) 21 December 2021 (2021-12-21) description, paragraphs 6-113 | 1-58 |
| X | CN 114731677 A (BEIJING XIAOMI MOBILE SOFTWARE CO., LTD.) 08 July 2022 (2022-07-08) description, paragraphs 36-236 | 1-58 |
| X | WO 2022133692 A1 (GUANGDONG OPPO MOBILE TELECOMMUNICATIONS CORP. LTD.) 30 June 2022 (2022-06-30) description, paragraphs 37-367 | 1-58 |
| X | MEDIATEK INC. "R4-2006478 "Discussion on active spatial relation switch"" *3GPP tsg_ran\wg4_radio*, 05 June 2020 (2020-06-05), sections 1-4 | 1-58 |
| X | ERICSSON. "R4-2007969 "On active TCI state switching requirements in NR-U"" *3GPP tsg_ran\wg4_radio*, 05 June 2020 (2020-06-05), sections 1-5, Annex A | 1-58 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 April 2023** | **18 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/111562**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022153494 A1 (NTT DOCOMO, INC.) 21 July 2022 (2022-07-21) entire document | 1-58 |

Form PCT/ISA/210 (second sheet) (July 2022)

**INTERNATIONAL SEARCH REPORT**
Information on patent family members

International application No.

**PCT/CN2022/111562**

| Patent document cited in search report | | | Publication date (day/month/year) | Patent family member(s) | | | Publication date (day/month/year) |
|---|---|---|---|---|---|---|---|
| CN | 113825229 | A | 21 December 2021 | WO | 2021254472 | A1 | 23 December 2021 |
| CN | 114731677 | A | 08 July 2022 | | None | | |
| WO | 2022133692 | A1 | 30 June 2022 | | None | | |
| WO | 2022153494 | A1 | 21 July 2022 | | None | | |

Form PCT/ISA/210 (patent family annex) (July 2022)